# EUROPEAN PATENT APPLICATION

(11) **EP 3 428 026 A1**
(43) Date of publication of application: **16.01.2019**
(21) Application number: 18151987.7
(22) Date of filing: 17.01.2018
(51) Int. Cl.: B60W 30/095, B60W 30/12

(54) **DRIVING SYSTEM FOR VEHICLE AND VEHICLE**

(30) Priority: 12.07.2017 KR 20170088537
(71) Applicant: LG Electronics Inc., Seoul 07336 (KR)
(72) Inventor: YUN, Taehui, 06772 Seoul (KR); BAE, Hyeonju, 06772 Seoul (KR); OH, Jonghyun, 06772 Seoul (KR)
(74) Representative: Vossius & Partner Patentanwälte Rechtsanwälte mbB

(57) **Abstract**

Disclosed is a driving system for a vehicle, including: an object detection apparatus configured to generate object information which is information about an object located outside the vehicle; and a processor configured to determine a driving lane for the vehicle based on a preset priority order and the object information, and when it is determined that a preset event has occurred, change the priority order based on the object information.

## Description

### BACKGROUND OF THE INVENTION

### 1. Field of the invention

The present invention relates to a driving system for a vehicle and the vehicle, and more particularly, to a driving system for a vehicle, which adjusts a priority of information that is used as the basis of determining a driving lane when a preset event has occurred.

### 2. Description of the Related Art

A vehicle is an apparatus that moves in a direction desired by a user riding therein. A representative example of a vehicle may be an automobile.

Recently, vehicles have been equipped with various types of sensors and electronic devices for convenience of a user. In particular, Advance Driver Assistance Systems (ADASs) are being studied and researched briskly to help a user drive easily and conveniently. In addition, efforts have been being made to study and develop a driving system for a vehicle, which enables the vehicle to travel autonomously.

The driving system is a system that provides a control signal to a driving device of the vehicle so as to make the vehicle move.

During travelling of the vehicle, the driving system may determine a driving lane for the vehicle and control the vehicle so that the vehicle autonomously travels within the driving lane while being preventing from moving out of the driving lane.

To this end, the driving system may determine a driving lane based on information about an object located outside the vehicle. For example, the driving system may determine a driving lane for the vehicle based on a line painted on a road surface.

However, in some cases, it is necessary to determine a driving lane based on an object other than a line. For example, when a vehicle is entering a construction area, it is required to determine a driving lane preferentially based on a traffic cone or a temporary facility, which guides a temporary line, rather than an existing line painted on a road surface.

Accordingly, efforts are being made to study and research a driving system for a vehicle, which adjusts a priority of information used as the basis of determining of a driving lane in a specific situation.

### SUMMARY OF THE INVENTION

The present invention has been made in view of the above problems, and it is one object of the present invention to provide a driving system for a vehicle, which selects an object suitable for determining a driving lane and determine a driving lane based on the selected object.

It is another object of the present invention to provide a driving system for a vehicle, which determines a driving lane even when a line is not detected properly.

Objects of the present invention should not be limited to the aforementioned objects and other unmentioned objects will be clearly understood by those skilled in the art from the following description.

In accordance with an embodiment of the present invention, the above and other objects can be accomplished by the provision of a driving system for a vehicle, including: an object detection apparatus configured to generate object information which is information about an object located outside the vehicle; and a processor configured to determine a driving lane for the vehicle based on a preset priority order and the object information, and when it is determined that a preset event has occurred, change the priority order based on the object information.

The details of other embodiments are included in the following description and the accompanying drawings.

The embodiments of the present invention have one or more effects as follows.

First, a driving system for a vehicle may determine a driving lane more accurately, because the driving system is able to change, depending on a driving situation of the vehicle, information which is used as the preferential basis for determining the driving lane.

Second, the driving system may perform autonomous driving of a vehicle or perform a lane departure prevention function, because the driving system is able to determine a driving lane based on other objects despite no traffic line.

Effects of the present invention should not be limited to the aforementioned effects and other unmentioned effects will be clearly understood by those skilled in the art from the claims.

### BRIEF DESCRIPTION OF THE DRAWINGS

The embodiments will be described in detail with reference to the following drawings in which like reference numerals refer to like elements wherein:
FIG. 1 is a view illustrating the external appearance of a vehicle according to an embodiment of the present invention;
FIG. 2 are different angled views of the external appearance of a vehicle according to an embodiment of the present invention;
FIGS. 3 and 4 are views illustrating the interior configuration of a vehicle according to an embodiment of the present invention;
FIGS. 5 and 6 are views for explanation of an object according to an embodiment of the present invention;
FIG. 7 is a block diagram illustrating a vehicle according to an embodiment of the present invention;
FIG. 8 is a block diagram illustrating the structure of a driving system for a vehicle according to an embodiment of the present invention;
FIG. 9 is a flowchart illustrating an operation procedure of a driving system for a vehicle according to an embodiment of the present invention;
FIG. 10 is a diagram illustrating how a driving system for a vehicle according to an embodiment of the present invention determines a driving lane suitable for a driving situation by changing a priority order;
FIG. 11 is a diagram illustrating how to a driving system for a vehicle according to an embodiment of the present invention outputs an alarming menu to a user in response to detection of a path guidance object;
FIG. 12 is a diagram illustrating how a driving system for a vehicle according to an embodiment of the present invention determines a driving lane based on a person who is giving a hand signal;
FIG. 13 is a diagram illustrating how a driving system for a vehicle according to an embodiment of the present invention determines a driving lane based on a path of travel of a preceding vehicle;
FIG. 14 is a diagram illustrating how a driving system for a vehicle according to an embodiment of the present invention determines a driving lane based on a previous path of travel of a different vehicle;
FIG. 15 is a diagram illustrating how a driving system for a vehicle according to an embodiment of the present invention outputs an image notifying that a preset event has occurred;
FIG. 16 is a diagram illustrating how a driving system for a vehicle according to an embodiment of the present invention determines a driving lane in an unpaved area;
FIGS. 17 and 18 are diagram illustrating how a driving system for a vehicle according to an embodiment of the present invention determines a driving lane based on a path of travel of a preceding vehicle;
FIG. 19 is a diagram illustrating how a driving system for a vehicle according to an embodiment of the present invention determines a driving lane based on information about a temporary line which is transmitted by a different device; and
FIG. 20 is a diagram how a driving system for a vehicle according to an embodiment of the present invention outputs a menu for notifying that a driving lane is not determined.

### DETAILED DESCRIPTION OF THE EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents and substitutions included in the scope and sprit of the present invention.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

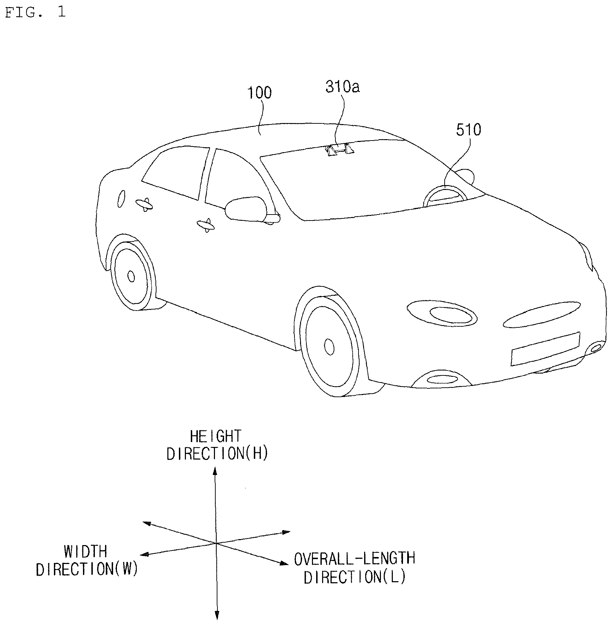

FIGS. 1 to 7 are diagrams for explanation of a vehicle according to the present invention. Hereinafter, the vehicle according to the present invention will be described with reference to FIGS. 1 to 7.

FIG. 1 is a view of the external appearance of a vehicle according to an embodiment of the present invention.

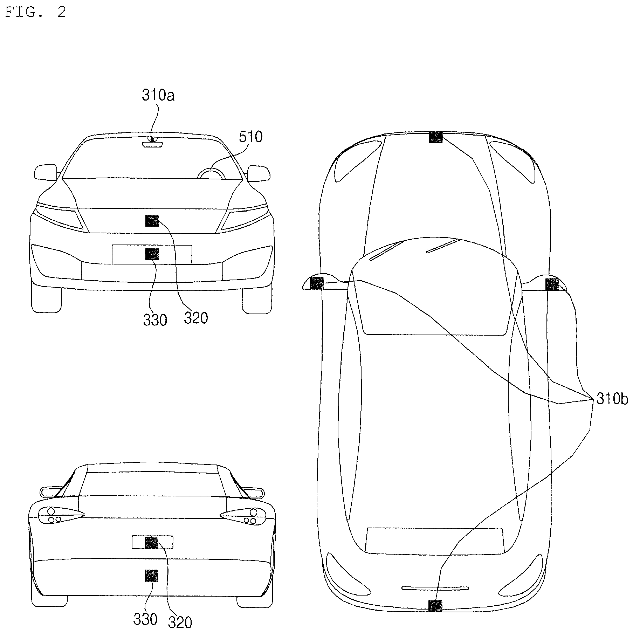

FIG. 2 is different angled views of a vehicle according to an embodiment of the present invention.

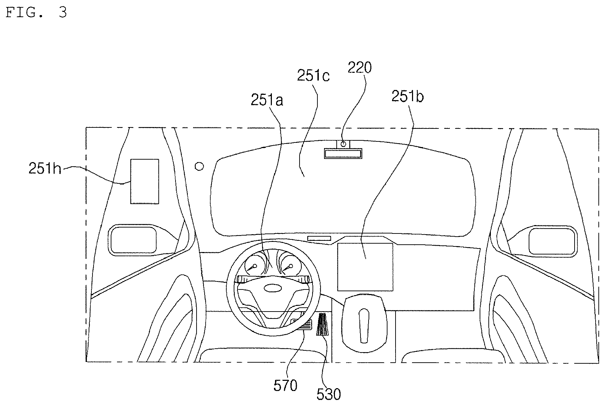

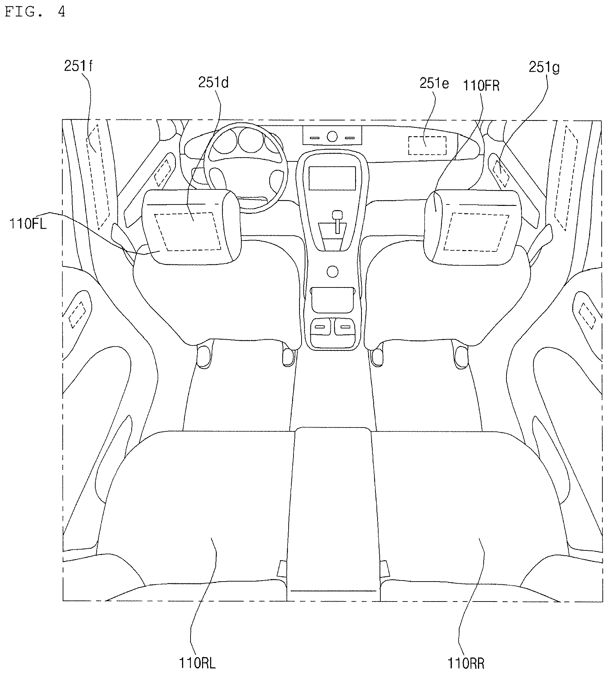

FIGS. 3 and 4 are views of the internal configuration of a vehicle according to an embodiment of the present invention.

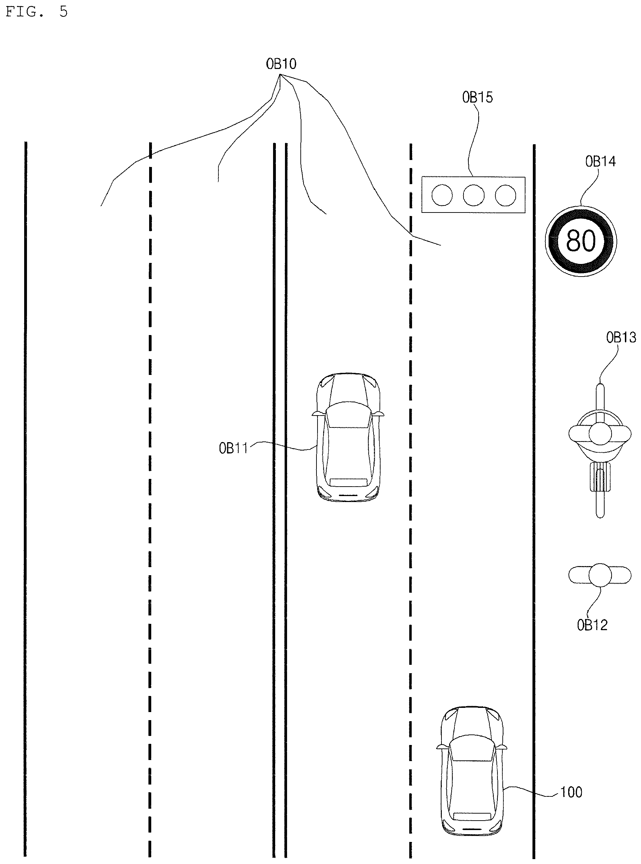

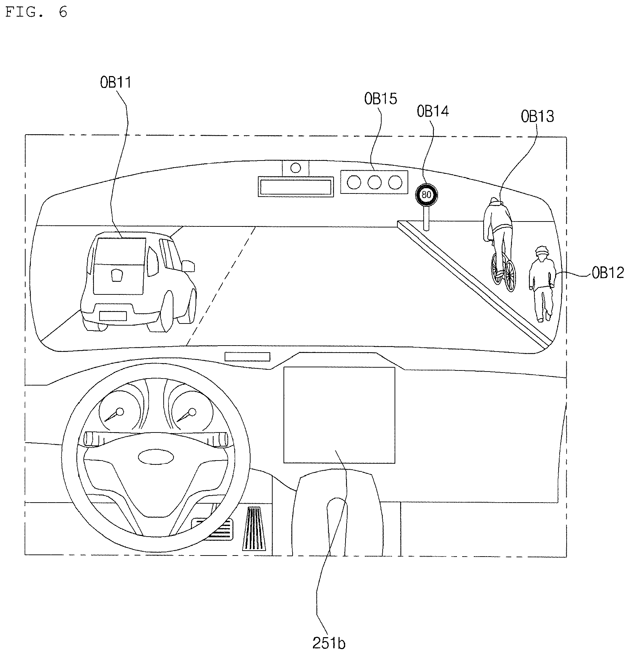

FIGS. 5 and 6 are views for explanation of objects according to an embodiment of the present invention.

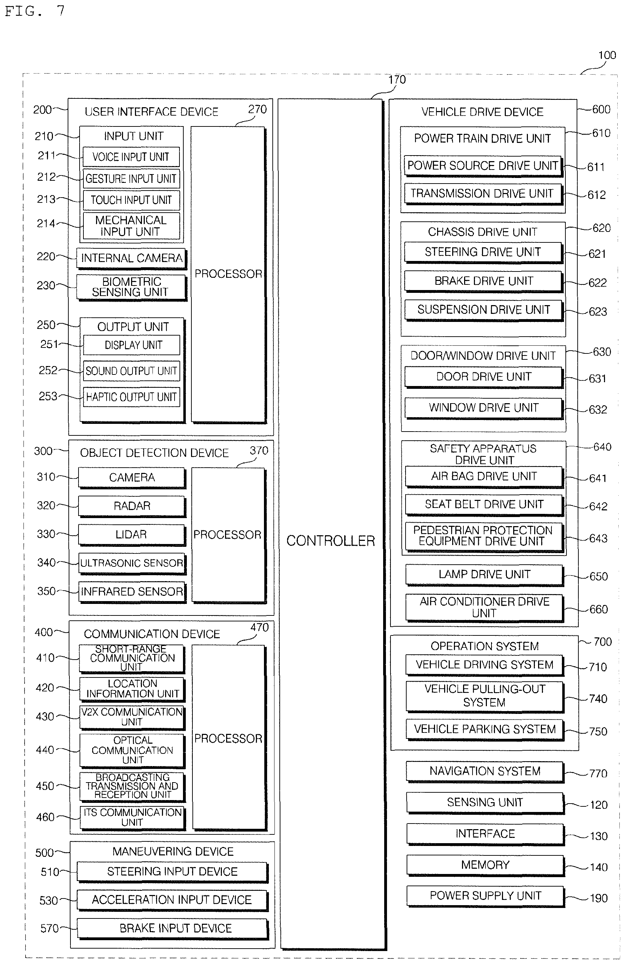

FIG. 7 is a block diagram illustrating a vehicle according to an embodiment of the present invention.

Referring to FIGS. 1 to 7, a vehicle 100 may include a plurality of wheels, which are rotated by a power source, and a steering input device 510 for controlling a driving direction of the vehicle 100.

The vehicle may include various driver assistance apparatuses. A driver assistance apparatus is an apparatus which assists a driver based on information acquired by various sensors. The driver assistance apparatus may be referred to as an Advanced Driver Assistance System (ADAS).

The vehicle 100 may include various lighting devices for vehicle. A lighting device for vehicle may include a head lamp, a brake lamp, a tail lamp, a turn signal lamp, a room lamp, etc. The rear combination lamp includes a brake lamp and a trail lamp.

The vehicle 100 may include a sensing device inside the vehicle 100, and a sensing device outside the vehicle 100.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

The vehicle 100 may be an autonomous vehicle. The vehicle 100 may travel autonomously under the control of a controller 170. The vehicle 100 may travel autonomously based on first information.

The first information may be information that is acquired by various units provided in the vehicle 100 during travelling of the vehicle 100. The first information may be information which is used to control the vehicle 100 by the controller 170 or a vehicle travel system 700.

The first information may include at least one of the following: object information acquired by an object detection apparatus 300; information received from a communication apparatus 400; a user input received by a user interface apparatus 200 or a driving manipulation apparatus 500; navigation information provided by a navigation system 770; various kinds of sensing information provided by a sensing unit 120, information acquired and provided by an interface unit 130; and information stored in a memory 140.

The first information may be acquired by at least one of the user interface apparatus 200, the object detection apparatus 300, the communication apparatus 400, the driving manipulation apparatus 500, the navigation system 770, the sensing unit 120, the interface unit 130, and the memory 140, and then may be provided to the controller 170 or the vehicle travel system 700. The controller 170 or the vehicle travel system 700 may control the vehicle 100 based on the first information so as to enable the vehicle 100 to travel autonomously.

The object information may be information about an object detected by the object detection apparatus 300. For example, the object information may be information about a type, a location, a size, and a color of the object. For example, the object information may be information about a line, an image painted on a road surface, an obstacle, a different vehicle, a pedestrian, a traffic light, various structures, and a traffic sign.

Communication information received by the communication apparatus 400 may be information transmitted by an external device which is able to perform communication. For example, the communication information may include at least one of the following: information transmitted by a different vehicle; information transmitted by a mobile terminal; information transmitted by a traffic infrastructure, and information existing in a specific network. The traffic infrastructure may include a traffic light, and the traffic light may transmit information about a traffic signal.

In addition, the first information may include at least one of the following: information about a state of any of various devices included in the vehicle 100; and information about a location of the vehicle 100. For example, the first information may include information about an error of any of various devices included in the vehicle 100, information about an operational state of any of various devices included in the vehicle 100, information about a lane in which the vehicle 100 is now travelling, and map information.

For example, based on the first information, the controller 170 or the vehicle travel system 700 may determine a type, a location, and movement of an object located in the vicinity of the vehicle 100. Based on the first information, the controller 170 or the vehicle travel system 700 may determine: a probability of collision between the vehicle 100 and an object; a type of a road in which the vehicle 100 is travelling; a state of a traffic light in the vicinity of the vehicle 100; and movement of the vehicle 100.

Out of the first information, information about an environment or situation in the surroundings of the vehicle 100 may be referred to as surrounding environment information or surrounding situation information.

Occupant information is information about an occupant in the vehicle 100. Out of the first information, the information about an occupant in the vehicle 100 may be referred to as occupant information.

The occupant information may be acquired by an internal camera 220 or a biometric sensing unit 230. In this case, the occupant information may include at least one of an image of the occupant in the vehicle 100 and biometric information of the occupant.

For example, the occupant information may be an image of the occupant acquired by the internal camera 220. For example, the biometric information may be body temperature information, heart rate information, and brainwaves information of the occupant acquired by the biometric sensing unit 230.

For example, based on the occupant information, the controller 170 may determine a location, a shape, a gaze, a face, a behavior, a facial expression, drowsiness, a health condition, and an emotional state of an occupant.

In addition, the occupant information may be information transmitted by a mobile terminal of an occupant and received by the communication apparatus 400. For example, the occupant information may be authentication information used to authenticate an occupant.

The occupant information may be acquired by an occupant detection unit 240 or the communication apparatus 400 and may be provided to the controller 170. The occupant information may be a concept included in the first information.

Vehicle state information is information about a state of any of various units included in the vehicle 100. Out of the first information, the information about a state of any of the units included in the vehicle 100 may be referred to as vehicle state information.

For example, the vehicle state information may include information about an operational state and an error of any one of the following: the user interface apparatus 200, the object detection apparatus 300, the communication apparatus 400, the driving manipulation apparatus 500, the vehicle drive apparatus 600, the vehicle travel system 700, the navigation system 770, the sensing unit 120, the interface unit 130, and the memory 140.

Based on the vehicle state information, the controller 170 may determine an operation or an error of any of various units included in the vehicle 100. For example, based on the vehicle state information, the controller 170 may determine whether a GPS signal is properly received from the vehicle 100, whether an error has occurred in at least one sensor included in the vehicle 100, or whether each device included in the vehicle 100 operates properly.

The vehicle state information may be a concept included in the first information.

A control mode of the vehicle 100 may be a mode indicating a subject which controls the vehicle 100.

For example, the control mode of the vehicle 100 may include: an autonomous mode in which the controller 170 or the vehicle travel system 700 included in the vehicle 100 controls the vehicle 100; a manual mode in which a driver of the vehicle 100 controls the vehicle 100; and a remote control mode in which a device other than the vehicle 100 controls the vehicle 100.

When the vehicle 100 is in the autonomous mode, the controller 170 or the vehicle travel system 700 may control the vehicle 100 based on the first information. Accordingly, the vehicle 100 may travel without a user's command received through the driving manipulation apparatus 500. For example, when the vehicle is in the autonomous mode, the vehicle 100 may travel based on information, data, or a signal generated by a driving system 710, a parking-out system 740, and a parking system 750.

When the vehicle 100 is in the manual mode, the vehicle 100 may be controlled in accordance with a user's command relating to at least one of steering, acceleration, and deceleration of the vehicle 100 received through the driving manipulation apparatus 500. In this case, the driving manipulation apparatus 500 may generate an input signal corresponding to the user's command and provide the input signal to the controller 170. The controller 170 may control the vehicle 100 based on the input signal provided by the driving manipulation apparatus 500.

When the vehicle 100 is in the remote control mode, a device other than the vehicle 100 may control the vehicle 100. When travelling in the remote control mode, the vehicle 100 may receive a remote control signal from a different device through the communication apparatus 400. The vehicle 100 may be controlled based on the remote control signal.

The vehicle 100 may enter one of the autonomous mode, the manual mode, and the remote control mode based on a user input received through the user interface apparatus 200.

The control mode of the vehicle 100 may switch to one of the autonomous mode, the manual mode, and the remote control mode based on the first information. For example, the control mode of the vehicle 100 may switch from the manual mode to the autonomous mode or from the autonomous mode to the manual mode based on object information generated by the object detection apparatus 300. The control mode of the vehicle 100 may switch from the manual mode to the autonomous mode or from the autonomous mode to the manual mode based on information received through the communication apparatus 400.

As illustrated in FIG. 7, the vehicle 100 may include the user interface apparatus 200, the object detection apparatus 300, the communication apparatus 400, the driving manipulation apparatus 500, a vehicle drive apparatus 600, the vehicle travel system 700, a navigation system 770, a sensing unit 120, an interface 130, a memory 140, a controller 170, and a power supply unit 190. In some embodiments, the vehicle 100 may further include other components in addition to the aforementioned components, or may not include some of the aforementioned components.

The user interface apparatus 200 is provided to support communication between the vehicle 100 and a user. The user interface apparatus 200 may receive a user input, and provide information generated in the vehicle 100 to the user. The vehicle 100 may enable User Interfaces (UI) or User Experience (UX) through the user interface apparatus 200.

The user interface apparatus 200 may include an input unit 210, an internal camera 220, a biometric sensing unit 230, an output unit 250, and an interface processor 270.

In some embodiments, the user interface apparatus 200 may further include other components in addition to the aforementioned components, or may not include some of the aforementioned components.

The input unit 210 is configured to receive a user input from a user, and data collected in the input unit 210 may be analyzed by the interface processor 270 and considered as a control command of the user.

The input unit 210 may be disposed inside the vehicle 100. For example, the input unit 210 may be disposed in a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the interface processor 270 or the controller 170.

The voice input unit 211 may include one or more microphones.

The gesture input unit 212 may convert a gesture input of a user into an electrical signal. The converted electrical signal may be provided to the interface processor 270 or the controller 170.

The gesture input unit 212 may include at least one selected from among an infrared sensor and an image sensor for sensing a gesture input of a user.

In some embodiments, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense a 3D gesture input by employing a Time of Flight (TOF) scheme, a structured light scheme, or a disparity scheme.

The touch input unit 213 may convert a user's touch input into an electrical signal. The converted electrical signal may be provided to the interface processor 270 or the controller 170.

The touch input unit 213 may include a touch sensor for sensing a touch input of a user.

In some embodiments, the touch input unit 213 may be formed integral with a display unit 251 to implement a touch screen. The touch screen may provide an input interface and an output interface between the vehicle 100 and the user.

The mechanical input unit 214 may include at least one selected from among a button, a dome switch, a jog wheel, and a jog switch. An electrical signal generated by the mechanical input unit 214 may be provided to the interface processor 270 or the controller 170.

The mechanical input unit 214 may be located on a steering wheel, a center fascia, a center console, a cockpit module, a door, etc.

An occupant detection unit 240 may detect an occupant inside the vehicle 100. The occupant detection unit 240 may include an internal camera 220 and a biometric sensing unit 230.

The internal camera 220 may acquire images of the inside of the vehicle 100. The interface processor 270 may sense a user state based on the images of the inside of the vehicle 100. For example, the detected user state may be a gaze, a face, a behavior, a facial expression, and a position of a user.

The interface processor 270 may determine a gaze, a face, a behavior, a facial expression, and a position of a user based on images of inside of the vehicle 100 acquired by the internal camera 220. The interface processor 270 may determine a user's gesture based on the images of the inside of the vehicle 100. A determination made by the interface processor 270 based on the images of the inside of the vehicle may be referred to as occupant information. In this case, the occupant information may be information indicating a gaze direction, a behavior, a facial expression, and a gesture of the user. The interface processor 270 may provide the occupant information to the controller 170.

The biometric sensing unit 230 may acquire biometric information of the user. The biometric sensing unit 230 may include a sensor for acquire biometric information of the user, and may utilize the sensor to acquire finger print information, heart rate information, and brainwave information of a user. The biometric information may be used to authenticate a user or determine a state of the user.

The interface processor 270 may determine a user's state based on the user's biometric information acquired by the biometric sensing unit 230. The user's state determined by the interface processor 270 may be referred to as occupant information. In this case, the occupant information may be information indicating whether the user loses consciousness, is drowsy, is excited, or is in an emergency situation. The interface processor 270 may provide the occupant information to the controller 170.

The output unit 250 is configured to generate a visual, audio, or tactile output.

The output unit 250 may include at least one selected from among a display unit 251, a sound output unit 252, and a haptic output unit 253.

The display unit 251 may display graphic objects corresponding to various types of information.

The display unit 251 may include at least one selected from among a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form an inter-layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface apparatus 200 may include a plurality of display units 251a to 251g.

The display unit 251 may be disposed in a region of a steering wheel, a region 251a, 251b, or 251e of an instrument panel, a region 251d of a seat, a region 251f of each pillar, a region 251g of a door, a region of a center console, a region of a head lining, a region of a sun visor, a region 251c of a windshield, or a region 251h of a window.

The sound output unit 252 converts an electrical signal from the interface processor 270 or the controller 170 into an audio signal, and outputs the audio signal. To this end, the sound output unit 252 may include one or more speakers.

The haptic output unit 253 generates a tactile output. For example, the tactile output is vibration. The haptic output unit 253 may operate to vibrate a steering wheel, a safety belt, and seats 110FL, 110FR, 110RL, and 110RR so as to allow a user to recognize the output.

The interface processor 270 may control the overall operation of each unit of the user interface apparatus 200.

In some embodiments, the user interface apparatus 200 may include a plurality of interface processors 270 or may not include any interface processor 270.

In the case where the user interface apparatus 200 does not include any interface processor 270, the user interface apparatus 200 may operate under control of the controller 170 or a processor of a different device inside the vehicle 100.

Meanwhile, the user interface apparatus 200 may be referred to as a multimedia device for vehicle.

The user interface apparatus 200 may operate under the control of the controller 170.

The object detection apparatus 300 is configured to detect an object outside the vehicle 100.

The object may include various objects related to travelling of the vehicle 100.

Referring to FIGS. 5 and 6, an object o may include a lane OB10, a line for distinguishing the lane OB10, a different vehicle OB11, a pedestrian OB12, a two-wheeled vehicle OB13, a traffic signal OB14 and OB15, a curb for distinguishing a sidewalk, a light, a road, a structure, a bump, a geographical feature, an animal, etc.

The lane OB10 may be a lane in which the vehicle 100 is traveling, a lane next to the lane in which the vehicle 100 is travelling, or a lane in which a different vehicle is travelling in the opposite direction. The lane OB10 may include left and right lines that define the lane.

The different vehicle OB11 may be a vehicle travelling in the vicinity of the vehicle 100. The different vehicle OB11 may be a vehicle within a predetermined distance from the vehicle 100. For example, the different vehicle OB11 may be a vehicle that is preceding or following the vehicle 100. For example, the different vehicle OB11 may be a vehicle travelling on the side of the vehicle 100.

The pedestrian OB12 may be a person located in the vicinity of the vehicle 100. The pedestrian OB12 may be a person within a predetermined distance from the vehicle 100. For example, the pedestrian OB12 may be a person on a sidewalk or on the roadway.

The two-wheeled vehicle OB13 is a vehicle located in the vicinity of the vehicle 100 and moves with two wheels. The two-wheeled vehicle OB13 may be a vehicle that has two wheels within a predetermined distance from the vehicle 100. For example, the two-wheeled vehicle OB13 may be a motorcycle or a bike on a sidewalk or the roadway.

The traffic signal OB14 and OB15 may include a traffic light OB15, a traffic sign OB14, and a pattern or text painted on a road surface.

The light may be light generated by a lamp provided in the different vehicle OB11. The light may be light generated by a street light. The light may be solar light.

The road may include a road surface, a curve, and slopes, such as an upward slope and a downward slope. The geographical feature may include a mountain and a hill.

The structure may be a body located around the road in the state of being fixed onto the ground. For example, the structure may include a streetlight, a roadside tree, a building, a traffic light, a bridge, a curb, and a guardrail.

The object may be classified as a movable object or a stationary object. For example, the movable object is an object that can move. For example, the movable object may be a concept including a nearby vehicle and a pedestrian. The stationary object is an object that cannot move. For example, the stationary object may be a concept including a traffic light, a roadway, a structure, and a line.

The object detection apparatus 300 may detect an obstacle located outside the vehicle 100. The obstacle may be one of an object, a puddle on the roadway, an uphill start point, a downhill start point, an inspection pit, a bump, and a curb. The object may be an object having volume and mass.

The object detection apparatus 300 may include a camera 310, a radar 320, a lidar 330, an ultrasonic sensor 340, an infrared sensor 350, and a detection processor 370.

In some embodiments, the object detection apparatus 300 may further include other components in addition to the aforementioned components, or may not include some of the aforementioned components.

The camera 310 may be located at an appropriate position outside the vehicle 100 in order to acquire images of the outside of the vehicle 100. The camera 310 may provide the acquired image to the detection processor 370. The camera 310 may be a mono camera, a stereo camera 310a, an Around View Monitoring (AVM) camera 310b, or a 360-degree camera.

For example, the camera 310 may be disposed near a front windshield in the vehicle 100 in order to acquire images of the front of the vehicle 100. Alternatively, the camera 310 may be disposed around a front bumper or a radiator grill.

For example, the camera 310 may be disposed near a rear glass in the vehicle 100 in order to acquire images of the rear of the vehicle 100. Alternatively, the camera 310 may be disposed around a rear bumper, a trunk, or a tailgate.

For example, the camera 310 may be disposed near at least one of the side windows in the vehicle 100 in order to acquire images of the side of the vehicle 100. Alternatively, the camera 310 may be disposed around a side mirror, a fender, or a door.

The radar 320 may include an electromagnetic wave transmission unit and an electromagnetic wave reception unit. The radar 320 may be realized as a pulse radar or a continuous wave radar depending on the principle of emission of an electronic wave. In addition, the radar 320 may be realized as a Frequency Modulated Continuous Wave (FMCW) type radar or a Frequency Shift Keying (FSK) type radar depending on the waveform of a signal.

The radar 320 may detect an object through the medium of an electromagnetic wave by employing a time of flight (TOF) scheme or a phase-shift scheme, and may detect a location of the detected object, the distance to the detected object, and the speed relative to the detected object

The radar 320 may be located at an appropriate position outside the vehicle 100 in order to sense an object located in front of the vehicle 100, an object located to the rear of the vehicle 100, or an object located to the side of the vehicle 100.

The lidar 330 may include a laser transmission unit and a laser reception unit. The lidar 330 may be implemented by the TOF scheme or the phase-shift scheme. The lidar 330 may be implemented as a drive type lidar or a non-drive type lidar.

When implemented as the drive type lidar, the lidar 330 may rotate by a motor and detect an object in the vicinity of the vehicle 100.

When implemented as the non-drive type lidar, the lidar 330 may utilize a light steering technique to detect an object located within a predetermined distance from the vehicle 100. The vehicle 100 may include a plurality of non-driving type lidars 330.

The lidar 330 may detect an object through the medium of laser light by employing the TOF scheme or the phase-shift scheme, and may detect a location of the detected object, the distance to the detected object, and the speed relative to the detected object.

The lidar 330 may be located at an appropriate position outside the vehicle 100 in order to sense an object located in front of the vehicle 100, an object located to the rear of the vehicle 100, or an object located to the side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

The ultrasonic sensor 340 may be located at an appropriate position outside the vehicle 100 in order to detect an object located in front of the vehicle 100, an object located to the rear of the vehicle 100, and an object located to the side of the vehicle 100.

The infrared sensor 350 may include an infrared light transmission unit and an infrared light reception unit. The infrared sensor 340 may detect an object based on infrared light, and may detect a location of the detected object, the distance to the detected object, and the speed relative to the detected object.

The infrared sensor 350 may be located at an appropriate position outside the vehicle 100 in order to sense an object located in front of the vehicle 100, an object located to the rear of the vehicle 100, or an object located to the side of the vehicle 100.

The detection processor 370 may control the overall operation of each unit of the object detection apparatus 300.

The detection processor 370 may detect and track an object based on acquired images. For example, using an image processing algorithm, the detection processor 370 may calculate the distance to the object and the speed relative to the object, determine a type, a location, a size, a shape, and a path of travel of the object, and determine content of a detected text.

The detection processor 370 may detect and track an object based on a reflection electromagnetic wave which is formed as a result of reflection a transmission electromagnetic wave by the object. Based on the electromagnetic wave, the detection processor 370 may, for example, calculate the distance to the object and the speed relative to the object.

The detection processor 370 may detect and track an object based on a reflection laser light which is formed as a result of reflection of transmission laser by the object. Based on the laser light, the detection processor 370 may, for example, calculate the distance to the object and the speed relative to the object.

The detection processor 370 may detect and track an object based on a reflection ultrasonic wave which is formed as a result of reflection of a transmission ultrasonic wave by the object. Based on the ultrasonic wave, the detection processor 370 may, for example, calculate the distance to the object and the speed relative to the object.

The detection processor 370 may detect and track an object based on reflection infrared light which is formed as a result of reflection of transmission infrared light by the object. Based on the infrared light, the detection processor 370 may, for example, calculate the distance to the object and the speed relative to the object.

The detection processor 370 may generate object information based on at least one of the following: an image acquired using the camera 310, a reflected electromagnetic wave received using the RADAR 320, a reflected laser beam received using the LIDAR 330, a reflected ultrasonic wave received using the ultrasonic sensor 340, and a reflected infrared light received using the infrared sensor 350.

Object information may be information on a type, a location, a size, a shape, a color, a path of travel, and a speed of an object in the vicinity of the vehicle 100, and content of a detected text.

For example, the object information may indicate the following: whether there is a lane in the vicinity of the vehicle 100; whether other vehicles are travelling in the vicinity of the vehicle 100 while the vehicle 100 is stopped; whether there is a parking available space in the vicinity of the vehicle 100; a probability for the vehicle 100 to collide with an object; a location of any pedestrian or bicycle in the vicinity of the vehicle 100; a type of the roadway on which the vehicle 100 is travelling; the current traffic signal indicated by a traffic light in the vicinity of the vehicle 100; and movement of the vehicle. The object information may be included in the first information.

The detection processor 370 may provide generated object information to the controller 170.

In some embodiments, the object detection apparatus 300 may include a plurality of processors 370 or may not include the detection processor 370. For example, each of the camera 310, the radar 320, the lidar 330, the ultrasonic sensor 340, and the infrared sensor 350 may include its own processor.

The object detection apparatus 300 may operate under the control of the controller 170 or a processor inside the vehicle 100.

The communication apparatus 400 is configured to perform communication with an external device. The external device may be a different vehicle, a mobile terminal, a wearable device, or a server.

To perform communication, the communication apparatus 400 may include at least one selected from a transmission antenna, a reception antenna, a Radio Frequency (RF) circuit capable of implementing various communication protocols, and an RF device.

The communication apparatus 400 may include a short-range communication unit 410, a location information unit 420, a V2X communication unit 430, an optical communication unit 440, a broadcast transmission and reception unit 450, an Intelligent Transport Systems (ITS) communication unit 460, and a communication processor 470.

In some embodiments, the communication apparatus 400 may further include other components in addition to the aforementioned components, or may not include some of the aforementioned components.

The short-range communication unit 410 is configured to perform short-range communication. The short-range communication unit 410 may support short-range communication using at least one selected from among BluetoothTM, Radio Frequency Identification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication unit 410 may form wireless area networks to perform short-range communication between the vehicle 100 and at least one external device.

The location information unit 420 is configured to acquire location information of the vehicle 100. For example, the location information unit 420 may include at least one of a Global Positioning System (GPS) module, a Differential Global Positioning System (DGPS) module, and a Carrier phase Differential GPS (CDGPS) module.

The location information unit 420 may acquire GPS information using the GPS module. The location information unit 420 may transmit the acquired GPS information to the controller 170 or the communication processor 470. The GPS information acquired by the location information unit 420 may be used for autonomous travelling of the vehicle 100. For example, the controller 170 may control the vehicle 100 based on GPS information and navigation information acquired by the navigation system 770, so that the vehicle 100 travels autonomously.

The V2X communication unit 430 is configured to perform wireless communication between a vehicle and a server (that is, vehicle to infra (V2I) communication), wireless communication between a vehicle and a nearby vehicle (that is, vehicle to vehicle (V2V) communication), or wireless communication between a vehicle and a pedestrian (that is, vehicle to pedestrian(V2P) communication).

The optical communication unit 440 is configured to perform communication with an external device through the medium of light. The optical communication unit 440 may include a light emitting unit, which converts an electrical signal into an optical signal and transmits the optical signal to the outside, and a light receiving unit which converts a received optical signal into an electrical signal.

In some embodiments, the light emitting unit may be integrally formed with a lamp provided included in the vehicle 100.

The broadcast transmission and reception unit 450 is configured to receive a broadcast signal from an external broadcasting management server or transmit a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The ITS communication unit 460 performs communication with a server that provides an intelligent traffic system. The ITS communication unit 460 may receive information on various traffic conditions from the server of the intelligence traffic system. Information on a traffic condition may include a degree of traffic congestion, a traffic condition on each road, and an amount of traffics in each area.

The communication processor 470 may control the overall operation of each unit of the communication apparatus 400.

The first information may include information received using at least one of the short-range communication unit 410, the location information unit 420, the V2X communication unit 430, the optical communication unit 440, and the broadcast transmission and reception unit 450.

For example, the first information may include information received from a different vehicle, the information which is about a location, a model, a driving lane, a speed, and various sensed values of the different vehicle. When information on various sensed values of the different vehicle is received, the controller 170 may acquire information on various objects in the vicinity of the vehicle 100, even though the vehicle 100 does not include an additional sensor.

For example, the first information may indicate the following: a type, location, and movement of an object in the vicinity of the vehicle 100; whether other vehicles are travelling in the vicinity of the vehicle 100 when the vehicle 100 is stopped; whether there is a parking available space in the vicinity of the vehicle 100; a probability for the vehicle 100 to collide with an object; a location of any pedestrian or bicycle in the vicinity of the vehicle 100; a type of the roadway on which the vehicle 100 is travelling; the current traffic signal indicated by a traffic light in the vicinity of the vehicle 100; and movement of the vehicle.

In some embodiments, the communication apparatus 400 may include a plurality of communication processors 470, or may not include any communication processor 470.

In the case where the communication apparatus 400 does not include the communication processor 470, the communication apparatus 400 may operate under control of the controller 170 or a processor of a device inside of the vehicle 100.

Meanwhile, the communication apparatus 400 may implement a vehicle multimedia device, together with the user interface apparatus 200. In this case, the vehicle multimedia device may be referred to as a telematics device or an Audio Video Navigation (AVN) device.

The communication apparatus 400 may operate under the control of the controller 170.

The driving manipulation apparatus 500 is configured to receive a user command for driving the vehicle 100.

In the manual mode, the vehicle 100 may operate based on a signal provided by the driving manipulation apparatus 500.

The driving manipulation apparatus 500 may include a steering input device 510, an acceleration input device 530, and a brake input device 570.

The steering input device 510 may receive a user command for steering of the vehicle 100 from a user. The user command for steering may be a command corresponding to a specific steering angle. For example, the user command for steering may correspond to a right 45 degrees.

The steering input device 510 may be in the form of a wheel so as to receive a steering input which is made by rotation of the wheel. In this case, the steering input device 510 may be referred to as a steering wheel or a handle.

The steering input device 510 may receive a user input with regard to the direction of travel of the vehicle 100. The steering input device 510 may take the form of a wheel to enable a steering input through the rotation thereof. In some embodiments, the steering input device may be provided as a touchscreen, a touch pad, or a button.

The acceleration input device 530 may receive a user command for acceleration of the vehicle from a user.

The brake input device 570 may receive a user input for deceleration of the vehicle 100 from a user. The acceleration input device 530 and the brake input device 570 may be in the form of a pedal.

In some embodiments, the acceleration input device or the break input device may be configured as a touch screen, a touch pad, or a button.

The driving manipulation apparatus 500 may operate under the control of the controller 170.

The vehicle drive apparatus 600 is configured to electrically control the operation of various devices of the vehicle 100.

The vehicle drive apparatus 600 may include a power train drive unit 610, a chassis drive unit 620, a door/window drive unit 630, a safety apparatus drive unit 640, a lamp drive unit 650, and an air conditioner drive unit 660.

In some embodiments, the vehicle drive apparatus 600 may further include other components in addition to the aforementioned components, or may not include some of the aforementioned components.

Meanwhile, the vehicle drive apparatus 600 may include a processor. Each unit of the vehicle drive apparatus 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

In the case in which a fossil fuel-based engine is the power source, the power source drive unit 611 may perform electronic control of the engine. As such the power source drive unit 611 may control, for example, the output torque of the engine. The power source drive unit 611 may adjust the output toque of the engine under control of the controller 170.

In the case where an electric motor is the power source, the power source drive unit 611 may control the motor. The power source drive unit 611 may control, for example, the RPM and toque of the motor under control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

Meanwhile, in the case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the direction of travel of the vehicle 100.

The brake drive unit 622 may perform electronic control of a brake apparatus provided inside the vehicle 100. For example, the brake drive unit 622 may reduce the speed of the vehicle 100 by controlling the operation of a brake located at a wheel.

Meanwhile, the brake drive unit 622 may control a plurality of brakes individually. The brake drive unit 622 may apply a different degree-braking force to each wheel.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

Meanwhile, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus. The window drive unit 632 may control opening or closing of a plurality of windows included in the vehicle 100.

The safety apparatus drive unit 640 may perform electronic control of various safety apparatuses provided inside the vehicle 100.

The safety apparatus drive unit 640 may include an airbag drive unit 641, a safety belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The safety belt drive unit 642 may perform electronic control of a seatbelt apparatus inside the vehicle 100. For example, upon detection of a dangerous situation, the safety belt drive unit 642 may control passengers to be fixed onto seats 110FL, 110FR, 110RL, and 110RR with safety belts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses provided inside the vehicle 100.

The air conditioner drive unit 660 may perform electronic control of an air conditioner inside the vehicle 100. For example, when the inner temperature of the vehicle 100 is high, an air conditioner drive unit 660 may operate the air conditioner so as to supply cool air to the inside of the vehicle 100.

The vehicle drive apparatus 600 may include a processor. Each unit of the vehicle dive device 600 may include its own processor.

The vehicle drive apparatus 600 may operate under control of the controller 170.

The vehicle travel system 700 is a system that controls the overall driving operation of the vehicle. The vehicle travel system 700 may operate in the autonomous mode.

The vehicle travel system 700 may perform autonomous driving of the vehicle 100 based on location information of the vehicle 100 and navigation information. The vehicle travel system 700 may include a driving system 710, a parking-out system 740, and a parking system 750.

In some embodiments, the vehicle travel system 700 may further include other components in addition to the aforementioned components, or may not include some of the aforementioned component.

Meanwhile, the vehicle travel system 700 may include a processor. Each unit of the vehicle travel system 700 may include its own processor.

Meanwhile, in some embodiments, in the case where the vehicle travel system 700 is implemented as software, the vehicle travel system 700 may be a subordinate concept of the controller 170.

Meanwhile, in some embodiments, the vehicle travel system 700 may be a concept including at least one selected from among the user interface apparatus 200, the object detection apparatus 300, the communication apparatus 400, the vehicle drive apparatus 600, and the controller 170.

The driving system 710 may control the vehicle 100 so that the vehicle 100 autonomously travels.

The driving system 710 may provide a control signal to the vehicle drive apparatus 600 based on first information so as to allow the vehicle to travel. The vehicle drive apparatus 600 may operate based on a control signal provided by the driving system 710. Accordingly, the vehicle 100 may travel autonomously.

For example, the driving system 710 may perform driving of the vehicle 100, by providing a control signal to the vehicle drive apparatus 600 based on information on an object received from the object detection apparatus 300.

The driving system 710 may perform driving of the vehicle 100, by providing a control signal to the vehicle drive apparatus 600 based on a signal from an external device through the communication apparatus 400.

The parking-out system 740 may control the vehicle 100 so that the vehicle 100 exits a parking space.

The parking-out system 740 may provide a control signal to the vehicle drive apparatus 600 based on the first information so that the vehicle 100 exits from a parking space. The vehicle drive apparatus 600 may operate based on a control signal provided by the parking-out system 740. Accordingly, the vehicle 100 may automatically exit from a parking space.

For example, the parking-out system 740 may perform an exit maneuver for the vehicle 100, by providing a control signal to the vehicle drive apparatus 600 based on object information received from the object detection apparatus 300.

For example, the parking-out system 740 may perform an exit maneuver for the vehicle 100, by providing a control signal to the vehicle drive apparatus 600 based on a signal received from an external device through the communication apparatus.

The parking system 750 may control the vehicle 100 so that the vehicle 100 is parked automatically.

The parking system 750 may provide a control signal to the vehicle drive apparatus 600 based on first information so as to park the vehicle 100. The vehicle drive apparatus 600 may operate based on a control signal provided by the parking system 750. Accordingly, the vehicle 100 may be automatically parked.

For example, the parking system 750 may park the vehicle 100, by providing a control signal to the vehicle drive apparatus 600 based on object information received from the object detection apparatus 300.

For example, the parking system 750 may park the vehicle 100, by providing a control signal to the vehicle drive apparatus 600 based on a signal received from an external device through the communication apparatus 400.

The navigation system 770 may provide navigation information. The navigation information may include at least one selected from among map information, information on a set destination, route information, information on various objects on a roadway, lane information, traffic information, and location information of a vehicle.

The navigation system 770 may include a memory and a processor. The memory may store navigation information. The processor may control the operation of the navigation system 770.

In some embodiments, the navigation system 770 may update pre-stored information by receiving information from an external device through the communication apparatus 400.

In some embodiments, the navigation system 770 may be classified as a subordinate element of the user interface apparatus 200.

The sensing unit 120 may sense the state of the vehicle. The sensing unit 120 may include an attitude sensor (for example, a yaw sensor, a roll sensor, and a pitch sensor), a collision sensor, a wheel sensor, a speed sensor, a gradient sensor, a weight sensor, a heading sensor, a yaw sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

The sensing unit 120 may acquire sensing signals with regard to, for example, vehicle attitude information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information about the pressure applied to an accelerator pedal, and information about the pressure applied to a brake pedal. The information acquired by the sensing unit 120 may be included in the first information.

The sensing unit 120 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The interface 130 may serve as a passage for various kinds of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under control of the controller 170.

The memory 140 is electrically connected to the controller 170. The memory 140 may store basic data for each unit, control data for the operational control of each unit, and input/output data. The memory 140 may be any of various hardware storage devices, such as a ROM, a RAM, an EPROM, a flash drive, and a hard drive. The memory 140 may store various data for the overall operation of the vehicle 100, such as programs for the processing or control of the controller 170.

In some embodiments, the memory 140 may be integrally formed with the controller 170, or may be provided as an element of the controller 170.

The power supply unit 190 may supply power required to operate each component under control of the controller 170. In particular, the power supply unit 190 may receive power from, for example, a battery inside the vehicle 100.

The controller 170 may control the overall operation of each unit inside the vehicle 100

The controller 170 may be referred to as an Electronic Controller (ECU).

When the vehicle 100 is in the autonomous mode, the controller 170 may perform autonomous driving of the vehicle 100 based on information acquired by a device provided in the vehicle 100. For example, the controller 170 may control the vehicle 100 based on navigation information provided by the navigation system 770 and information provided by the object detection apparatus 300 and the communication apparatus 400. When the vehicle 100 is in the manual mode, the controller 170 may control the vehicle based on an input signal corresponding to a user command received by the driving manipulation apparatus 500. When the vehicle 100 is in the remote control mode, the controller 170 may control the vehicle 100 based on a remote control signal received by the communication apparatus 400.

Various processors and thee controller 170 included in the vehicle 100 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

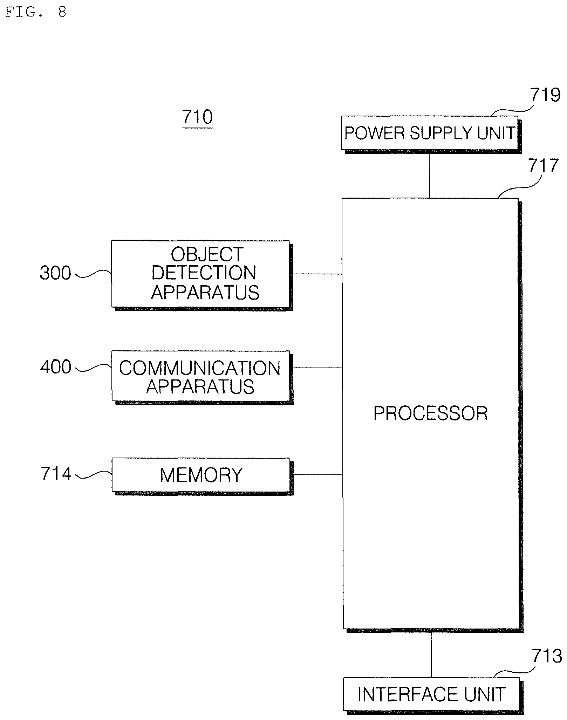

FIG. 8 is a block diagram illustrating the structure of a driving system for a vehicle according to an embodiment of the present invention.

The driving system 710 according to the present invention may include an object detection apparatus 300, a communication apparatus 400, a memory 714, a power supply unit 719, an interface unit 713, and a processor 717.

The object detection apparatus 300 may generate information about an object located outside the vehicle 100. The information about the object may be referred to as object information.

The object detection apparatus 300 may provide object information to the processor 717. Based on the object information, the processor 717 may determine an object located outside the vehicle 100.

The communication apparatus 400 may receive information transmitted by a different device. The information transmitted by the different device may be referred to as communication information.

The different device may be a different vehicle, a server, a road infrastructure, and a mobile terminal.

The communication apparatus 400 may provide the communication information to the processor 717.

The memory 714 may be electrically connected to the processor 717. The memory 714 may provide stored information to the processor 717.

The memory 714 may store various types of information. For example, the memory 714 may store basic data about the driving system 710, control data for controlling operation of each unit of the driving system 710, and input/output data.

The memory 714 may be implemented as any of various hardware storage devices, such as an ROM, an RAM, an EPROM, a flash drive, and a hard drive.

In some embodiments, the memory 714 may be integrally formed with the processor 717 or may be implemented as a subordinate element of the processor 717.

The power supply unit 719 may provide power required to operate each unit of the driving system 710. The power supply unit 719 may be supplied with power from a batter provided in the vehicle 100.

The interface unit 713 may act as a channel to any element of the vehicle 100 or any external device.

For example, the interface unit 713 may be connected to the controller 170 of the vehicle 100, and may provide information or a signal received from the controller 170 to the processor 717 or provide information or signal received from the processor 717 to the controller 170.

For example, the interface unit 713 may be connected to the user interface apparatus 200 provided in the vehicle 100, and may provide a user input or occupant information received from the user interface apparatus 200 to the processor 717. The interface unit 713 may provide information and a signal received from the processor 717 to the user interface apparatus 200. Accordingly, the processor 717 may control the user interface apparatus 200. In addition, the processor 717 may output various types of alarms through the output unit 250.

For example, the interface unit 713 may be connected to the vehicle drive apparatus 600 provided in the vehicle 100 and provide a control signal from the processor to the vehicle drive apparatus 600. Accordingly, the processor 717 may control the vehicle drive apparatus 600. The processor 717 may control the vehicle 100 by controlling the vehicle drive apparatus 600.

For example, the interface unit 713 may include a port which is connectable to a mobile terminal. The interface unit 713 may be connected to the mobile terminal through the port. In this case, the interface unit 713 may exchange data with a mobile terminal.

The processor 717 may be electrically connected to various elements of the driving system 710. The processor 717 may control various elements of the driving system 710.

The processor 717 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

The processor 717 may determine a driving environment of the vehicle 100 based on either or both of object information provided by the object detection apparatus 300 and communication information provided by the communication apparatus 400. For example, based on the object information, the processor 717 may determine various objects existing outside the vehicle 100. For example, based on the communication information, the processor 717 may determine a traffic condition in a specific area.

The processor 717 may determine a driving lane for the vehicle 100 based on a preset priority order and object information.

A lane may be a lane in which the vehicle 100 is travelling, a lane next to the lane in which the vehicle 100 is travelling, and a lane in which an opposing vehicle is travelling.

The lane may be formed by lines painted on a road surface. The lane may be a region between two lines arranged side by side.

A driving lane is a region on a road surface, which is determined by the driving system to be a lane in which the vehicle 100 needs to travel. The driving lane is a virtual lane determined by the driving system 710. The driving lane may not be a region determined by lines painted on a road surface, but may be a region on the road surface which is determined by the driving system 710.

When the vehicle 100 is in the autonomous mode, the processor 717 may provide a control signal based on a determined driving lane so that the vehicle 100 travels within the driving lane. Accordingly, the vehicle 100 autonomously travels along the determined driving lane.

When the vehicle 100 is in the manual mode, the processor 717 may provide a control signal based on a determined driving lane so that the vehicle 100 does not move out of the driving lane. Accordingly, the vehicle 100 may not move out of the determined driving lane.

To this end, the processor 717 may determine a driving lane based on one or more objects which are determined based on object information.

For example, the processor 717 may determine a driving lane based on a line painted on a road surface. In this case, the processor 717 may determine that a region between two lines arranged side by side is a driving lane.

For example, the processor 717 may determine a driving lane based on a plurality of traffic cones set up on the road. In this case, the processor 717 may determine that a region formed in a direction in which the plurality of traffic cones is placed is a driving lane.

There are various types of objects detected by the object detection apparatus 300. The processor 717 may determine a type of a detected object based on object information. Accordingly, the processor 717 may determine a driving lane based on various types of objects.

For example, a type of an object used by the processor to determine a driving lane includes a line painted on a road surface, a road facility installed on the road, a lane guide structure placed temporarily on the road, a person who is giving a hand signal, a different vehicle, and a traffic sign.

When the processor 1717 needs to determine a driving lane based on various types of objects, which type of object should be selected as a preferential basis of determining a driving lane comes into question.

A priority order used in the present invention is about an order for determining a driving lane based on one or more objects.

For example, according to a priority order, a lane may have a first priority, a road facility may have a second priority, and a lane guide structure may have a third priority. The priority order may be preset information. Information about the priority order may be stored in the memory 714.

A first priority object may be used first to determine a driving lane.

For example, when it is determined, based on object information, that a first priority object and a second priority object exist, the processor 717 may determine a driving lane preferentially based on the first priority object.

For example, when it is determined based on object information that a second priority object exists except for a first priority object, the processor 717 may determine a driving lane based on the second priority object.

Based on a priority order stored in the memory 714, the processor 717 may determine an order by which one or more objects are used to determine a driving lane.

Based on the priority order, the processor 717 may determine a first priority object that is most preferentially used to determine a driving lane.

The first priority object is determined based on the preset priority order, and thus, if the processor 717 changes the priority order, the first priority object is changed. That is, the processor 717 may determine the first priority object by changing the priority order.

For example, the processor 717 may determine that a lane is a first priority object, based on a priority order.

The processor 717 may determine a driving lane preferentially based on a first priority object which is determined on the basis of the priority order.

For example, the processor 717 may determine a lane to be a first priority object based on a priority order. In this case, the processor 717 may determine a driving lane preferentially based on a lane which is detected based on object information.

When it is determined, based on object information or communication information, that a preset event has occurred, the processor 717 may change a priority order.

The processor 717 may store the changed priority order in the memory 714. In this case, the memory 714 may store an initial priority order and the most recently changed priority order.

An event indicates a specific situation. A preset event may be a situation in which a specific object has been detected, or a specific driving situation. Information about the preset event may be stored in the memory 714.

For example, the preset event may be the case where a preset path guidance object (for example, a traffic cone, a person who is giving a hand signal, and a structure temporarily installed on the road) has been detected in front of the vehicle 100. In this case, when it is determined, based on object information, that the preset path guidance object is located in front of the vehicle 100, the processor 717 may determine that an event has occurred.

For example, the preset event may be any one of situations where the vehicle 100 is entering a construction area, where an accident has occurred ahead of the vehicle 100, where the vehicle 100 is entering an unpaved area, where a preceding vehicle travelling ahead of the vehicle 100 suddenly moves in an unexpected way, where a visibility of a lane indicative of a driving lane is equal to or smaller than a reference value, where a lane is not detected, and where the margin of error between object information provided by the object detection apparatus 300 and object information transmitted by a different vehicle is equal to or greater than a preset value.

The processor 717 may change a priority order based on the event which has occurred.

For example, when a preset path guidance object is detected, the processor 717 may change a priority order so that the detected path guidance object becomes a first priority object.

For example, when it is determined that the vehicle 100 is entering a construction area or that an accident has occurred ahead of the vehicle 100, the processor 717 may change a priority order, so that a temporary guidance structure installed on the road or a person giving a hand signal becomes a first priority object.

The processor 717 may determine a first priority object based on the changed priority order.

For example, when it is determined that an event has occurred with a lane being determined to be a first priority object, the processor 717 may change the priority order so that an object other than the lane becomes the first priority object.

Accordingly, when it is determined that a preset event has occurred, the processor 717 may determine a first priority object based on the occurred event.

For example, when a lane is a first priority object before a priority order is changed, the processor 717 may determine that an object other than the lane is the first priority object, based on an event which has occurred.

For example, when it is determined, based on object information, a preset path guidance object is located in front of the vehicle 100, the processor 717 may determine that the path guidance object is the first priority object.

In this case, a preset event is a situation where the preset path guidance object has been detected in front of the vehicle 100.

The processor 717 may change a priority order so that the detected path guidance object becomes the first priority object. The processor 717 may determine the first priority object based on the changed priority order. Accordingly, the detected path guidance object becomes the first priority object.

The processor 717 may determine a driving lane preferentially based on the path guidance object which is determined to be a first priority object. In this case, when it is determined, based on object information, that the lane and the path guidance object exist, the processor 717 may determine a driving lane preferentially based on the path guidance object, rather than the lane.

For example, the preset guidance object may be a lane guidance structure or a person who is giving a hand signal.

The lane guidance structure may be a structure which is temporarily installed on the road to guide a lane.

For example, the lane guidance structure may be a traffic cone, a reflector attached onto a road surface to indicate a temporary lane, a temporary barrier structure installed on a roadway to stop traffic flows, a temporary sign installed on the road, etc.

For example, when it is determined, based on object information, that the lane guidance structure is located in front of the vehicle 100, the processor 717 may determine that the lane guidance structure is the first priority object.

For example, when it is determined, based on object information, that a person giving a hand signal is located in front of the vehicle 100, the processor 717 may determine that the person giving a hand signal is the first priority object.

Based on object information, the processor 717 may determine a hand signal given by a person.

When a person giving a hand signal is determined to be a first priority object, the processor 717 may determine a driving lane based on the hand signal.

When the hand signal given by the person is determined to guide the vehicle 100 to move rightward, the processor 717 may determine that a driving lane detours to the right side of the person.

For example, when the hand signal given by the person is determined to guide the vehicle 100 to move leftward, the processor 717 may determine that a driving lane detours to the left side of the person.

For example, when it is determined, based on object information, that a lane guidance structure and a person giving a hand signal are located in front of the vehicle 100, the processor 717 may determine that the person is a first priority object and the structure is a second priority object.

In this case, the processor 717 may determine the driving lane preferentially based on the signal given by the person. When no person is detected, the processor 717 may determine a driving lane based on a structure.

When it is determined, based on object information, that a preset path guidance object exists in front of the vehicle 100 and that there is a preceding vehicle travelling ahead of the vehicle 100, the processor 717 may determine a first priority object based on a path of travel of the preceding vehicle. The processor 717 may determine a priority order based on the path of travel of the preceding vehicle.

For example, when it is determined that there is a preceding vehicle travelling ahead of the vehicle 100, the processor 717 may change a priority order so that an object corresponding to a path of travel of the preceding vehicle from among one or more objects detected based on object information becomes the first priority object.

For example, when it is determined, based on object information, that traffic cones and a lane are at different locations and that a preceding vehicle is travelling along traffic cones, the processor 717 may determine that the traffic cones correspond to a path of travel of the preceding vehicle. In this case, the processor 717 may determine that each of the traffic cones is the first priority object and the lane is the second priority object.

When it is determined that there is no preceding vehicle, the processor 717 may determine the first priority object based on a previous path of travel of another different vehicle, which is determined based on communication information.

A traffic infrastructure or a server for providing traffic information may collect paths of travel of the other vehicles travelling in a specific area. Information about the path of travel of the other vehicles travelling in the specific area is included in traffic information. The traffic infrastructure or the server may provide traffic information about the specific area to the vehicle 100 which is now travelling in the specific area. The traffic information may include information about a traffic condition, occurrence of an accident, a degree of traffic congestion, and previous paths of travel of the other vehicles in the specific area.

Using the communication apparatus 400, the processor 717 may receive traffic information which is transmitted by the traffic infrastructure or the server.

Based on the received traffic information, the processor 717 may determine the previous path of travel of the other vehicles which traveled in an area in which the vehicle 100 is travelling.

The processor 717 may determine that an object corresponding to the previous path of travel of other vehicles from among one or more object detected based on object information is a first priority object.

For example, when it is determined, based on object information, that a line painted on a road surface and a temporary facility installed on the road are at different locations and that the other vehicles previously travelled along the temporary facility, the processor 717 may determine that the temporary facility corresponds to a previous path of travel of the other vehicles. In this case, the processor 717 may determine that the temporary facility is a first priority object and the lane is a second priority object.

When it is determined, based on object information or communication information, that the vehicle 100 is entering a construction area or that an accident has occurred ahead of the vehicle 100, the processor 717 may determine a preset path guidance object to be the first priority object.

Based on object information or communication information, the processor 717 may determine whether the vehicle is entering a construction area or whether an accident has occurred ahead of the vehicle 100.

For example, when a sign indicating the presence of a construction area on a roadway in which the vehicle 100 is travelling is detected based on object information, the processor 717 may determine that the vehicle 100 is entering the construction area.

For example, when a temporary sign indicating accident occurrence is detected in front of the vehicle 100 based on the object information, the processor 717 may determine that an accident has occurred ahead of the vehicle 100.

For example, the processor 717 may determine whether the vehicle 100 is entering a construction area, based on traffic information or map information included in communication information.

For example, the processor 717 may receive information indicative of an accident location through the communication apparatus 400, and may determine, based on the received information, whether an accident has occurred ahead of the vehicle 100.

When it is determined that the vehicle 100 is entering the construction area or that an accident has occurred ahead of the vehicle 100, the processor 717 may determine a path guidance object to be the first priority object, even though any path guidance object has not been detected.

For example, when it is determined that the vehicle 100 is entering a construction area, the processor 717 may determine that a path guidance object which is preset to correspond to the construction area is a first priority object.

For example, a path guidance object which is preset to correspond to a construction area may be a reflector attached onto a road surface to indicate a temporary lane, a temporary barrier facility installed on the road, a traffic cone, a person who is giving a hand signal, etc.

For example, when it is determined that an accident has occurred ahead of the vehicle 100, the processor 717 may determine that a path guidance object which is preset to correspond to a traffic accident is a first priority object.

For example, a path guidance object which is preset to correspond to a traffic accident may be a temporary sign installed on the road to indicate the accident, an accident-involved vehicle, and a person who is giving a hand signal.

Information about a path guidance object preset to correspond to a construction area or a traffic accident is stored in the memory 714.

The processor 717 may determine a driving lane for the vehicle preferentially based on a path guidance object which is determined based on object information.

Accordingly, the vehicle 100 travels with reference to a path guidance object, such as a traffic cone and a temporary facility, rather than a line painted on the road surface, and thus, it is possible to improve driving safety.

When it is determined, based on object information or communication information, that the vehicle 100 is entering an unpaved area, the processor 717 may determine a driving lane based on color distribution of the ground, which is determined based on the object information.

Based on the object information or the communication information, the processor 717 may determine whether the vehicle 100 is entering an unpaved area.

For example, when it is determined, based on object information, that there is no line on a road surface, the processor 717 may determine that the vehicle 100 is entering an unpaved area.

For example, when it is determined, based on object information, that an image of a place the vehicle 100 is travelling corresponds to an image of a pre-stored unpaved area, the processor 717 may determine that the vehicle 100 is entering an unpaved area.

For example, based on map information included in communication information, the processor 717 may determine whether the vehicle 100 is entering an unpaved area.

Based on object information, the processor 717 may determine color distribution of the ground in the surroundings of the vehicle 100.

In the case of an unpaved area, a traffic line is not painted on the ground surface. However, a region able to be travelled by vehicles and a region unable to be travelled by vehicles may be distinguishable by color.

Accordingly, based on color distribution of the ground which is determined based on object information, the processor 717 may determine that one region of the ground surface, which is formed long with a color distinguishable from other regions, is a driving lane for the vehicle 100.

When it is determined, based on object information, that a speed at which a preceding vehicle travelling ahead of the vehicle 100 is steered is equal to or greater than a first reference value, the processor 717 may determine a driving lane preferentially based on a path of travel of the preceding vehicle.

The first reference value is a reference value used to determine whether the preceding vehicle is steered drastically.

When the speed at which the preceding vehicle is steered is equal to or greater than the first reference value, the preceding vehicle is considered to move leftward or rightward drastically.

When the preceding vehicle is moving leftward or rightward drastically, the preceding vehicle may be regarded as attempting to avoid a specific object.

When the speed at which the preceding vehicle is steered is equal to or greater than the first reference value, the processor 717 may determine that an object needed to be avoided exists in front of the preceding vehicle.

The processor 717 may determine a driving lane for the vehicle 100 preferentially based on a path of travel of the preceding vehicle, rather than a line painted on a road surface.

In this case, the processor 717 may determine that a path detouring along a direction of travel of the preceding vehicle is a driving lane.

When it is determined, based on object information, that a visibility of a line indicating a driving lane is equal to or greater than a second reference value, the processor 717 may determine a driving lane preferentially based on a path of travel of a preceding vehicle travelling ahead of the vehicle 100.

When it is determined that a visibility of a line indicating a previous driving lane is equal to or smaller than the second reference value and that there is no preceding vehicle, the processor 717 may determine a driving lane preferentially based on a previous path of travel of a different vehicle, which is determined based on communication information.

The second reference value is a reference value used to determine whether a line is possibly not detected due to its low visibility.

Based on object information, the processor 717 may determine a visibility of a line indicating a driving lane.

When the visibility of the line is equal to or smaller than the second reference value, the driving system 710 may not be able to detect a line due to the low visibility of the line.

When the visibility of a line indicating a driving lane is equal to or smaller than the second reference value, the line may not be detected. Thus, it may be safer to determine the driving lane preferentially based on a path of travel of a preceding vehicle.

When it is determined that a visibility of a line indicating a driving lane is equal to or smaller than the second reference value, the processor 717 may determine that a path of travel of the preceding vehicle is a driving lane for the vehicle 100.

In this case, when the vehicle 100 is in the autonomous mode, the processor 717 may provide a control signal to the vehicle drive apparatus 600 so that the vehicle 100 travels following the preceding vehicle.

The processor 717 may determine a driving lane preferentially based on a previous path of travel of a different vehicle, which is determined based on communication information.

The processor 717 may determine that a previous path of travel of the different vehicle is a driving lane for the vehicle 100.

In this case, when the vehicle 100 is in the autonomous mode, the processor 717 may provide a control signal to the vehicle drive apparatus 600 so that the vehicle 100 travels along the previous path of travel of the different vehicle.

When information about a temporary line is received through the communication apparatus 400, the processor 717 may determine a driving lane preferentially based on the information about the temporary line.

The temporary line is a virtual line determined by a different vehicle or a traffic infrastructure.

The different vehicle or the traffic infrastructure may determine a temporary line, depending on a road condition. The traffic infrastructure may determine the temporary line.

A temporary line is not an actual line painted on a road surface, and thus, information about a temporary line may include information about a location of the temporary line, which is determined by a different vehicle or a traffic infrastructure.

Based on the location information of the temporary line, the processor 717 may determine a location of the temporary line over the ground being travelled by the vehicle 100.

Based on the information about the temporary line, the processor 717 may display the temporary line with augmented reality on the transparent display 251c which is implemented in the windshield of the vehicle 100.

The processor 717 may determine that the temporary line determined based on the information about the temporary line is a driving lane for the vehicle 100.

When a first driving lane determined based on communication information and a second driving lane determined based on object information are different, the processor 717 may display the first driving lane and the second driving lane on the display unit 251 provided in the vehicle 100.

The first driving lane is a driving lane which is determined based on object information acquired and provided by a different vehicle.

The object information acquired by the different vehicle is information which is detected by the object detection apparatus 300 provided in the different vehicle.

The different vehicle may broadcast the acquired object information or transmit the acquired object information to the vehicle 100.

The communication information may include object information transmitted by the different vehicle.

The processor 717 may determine the first driving lane based on the object information transmitted by the different vehicle.

The processor 717 may compare a first driving lane, which is determined based on the object information acquired by the different vehicle, and a second driving lane, which is determined based on object information acquired by the vehicle 100.

In this case, the object information acquired by the different vehicle and the object information acquired by the vehicle 100 are both about the same region. Accordingly, the first driving lane and the second driving lane need to be theoretically almost identical.

However, as vehicles is travelling in different states and environments, the first driving lane and the second driving lane may be determined different.

The processor 717 may determine a degree in which the first driving lane and the second driving lane coincide.

When the degree in which the first driving lane and the second driving lane coincide is equal to or greater than a third reference value, the processor 717 may determine that the first driving lane and the second driving lane are almost identical.

The third reference value is a reference value used to determine whether the first driving lane and the second driving lane are identical. When the degree in which the first driving lane and the second driving lane coincide is equal to or greater than the third reference value, the processor 717 may determine that the first driving lane and the second driving lane are almost identical. For example, the third reference value may be 80%.

When the degree in which the first driving lane and the second driving lane coincide is equal to or greater than the third reference value, the processor 717 may determine that the first driving lane or the second driving lane is a driving lane for the vehicle 100.

When the degree in which the first driving lane and the second driving lane coincide is smaller than a fourth reference value, the processor 717 may determine that the first driving lane and the second driving lane are different.

The fourth reference value is a reference value used to determine whether the first driving lane and the second driving lane are different. When the degree in which the first driving lane and the second driving lane coincide is smaller than the fourth reference value, the processor 717 may determine that the first driving lane and the second driving lane are different. For example, the fourth reference value may be 80%.

When it is determined that the degree in which the first driving lane and the second driving lane coincide is smaller than the fourth reference value, the processor 717 may display an image, which shows the first driving lane and the second driving lane, on the display unit 251.

Accordingly, an occupant inside the vehicle 100 may be able to recognize a difference between a driving lane based on an object detected by the vehicle 100 and a driving lane based on an object detected by a different vehicle.

When the vehicle 100 is autonomously travelling, the processor 717 may display, on the display unit 251, a menu for selecting one of the first driving lane and the second driving lane.

When the vehicle 100 is autonomously travelling and it is determined that the first driving lane and the second driving lane are different, the processor 717 may provide a control signal to the user interface apparatus 200 so that the menu is displayed on the display unit 251.

Accordingly, the menu for selecting one of the first driving lane and the second driving lane may be displayed on the display unit 251.

The menu for selecting one of the first driving lane and the second driving lane may be a top view screen on which the first driving lane and the second driving lane are displayed. The menu may include a text which instructs selecting of one of the two displayed driving lanes.

The processor 717 may provide a control signal so that the vehicle 100 autonomously travels within a lane which is selected by a user input from between the first driving lane and the second driving lane.

The processor 717 may provide a control signal to the vehicle drive apparatus 600 so that the vehicle 100 autonomously travels.

When a user input is not received for a preset period of time after the menu is displayed, the processor 717 may provide a control signal so that the vehicle 100 performs an emergency stop.

The emergency stop is a maneuver of stopping the vehicle 100 at a location closest to the current location of the vehicle 100 among one or more parking available spaces in the vicinity of the vehicle 100.

When it is determined, based on object information, that there is no object indicative of a driving lane while the vehicle 100 is autonomously travelling, the processor 717 may determine the driving lane based on a path of travel of a preceding vehicle which is travelling ahead of the vehicle 100. In this case, the processor 717 may determine that the path of travel of the preceding vehicle is a driving path of the vehicle 100, and may provide a control signal so that the vehicle 100 autonomously travels along the determined driving path.

When it is determined that there is no preceding vehicle, the processor 717 may determine a driving lane based on a previous path of travel of a different vehicle, which is determined based on communication information.

When it is determined that there is no object indicative of a driving lane, the processor 717 may output an alarm through the output unit 250 to notify that a driving lane has not been detected.

When it is determined that a preset period of time elapses after the alarm is output, the processor 717 may provide a control signal so that the vehicle 100 performs an emergency stop.

The alarm which notifies that a driving lane has not been detected may be an image or sound indicating that a driving lane has not been detected.

When the vehicle 100 is in the autonomous mode, the processor 717 may provide a control signal based on a determined driving lane so that the vehicle 100 autonomously travels within the driving lane. Accordingly, the vehicle 100 autonomously travels along the determined driving lane.

When the vehicle 100 is in the manual mode, the processor 717 may provide a control signal based on a determined driving lane so that the vehicle 100 is prevented from moving out of the driving lane. Accordingly, the vehicle 100 may not move out of the determined driving lane.

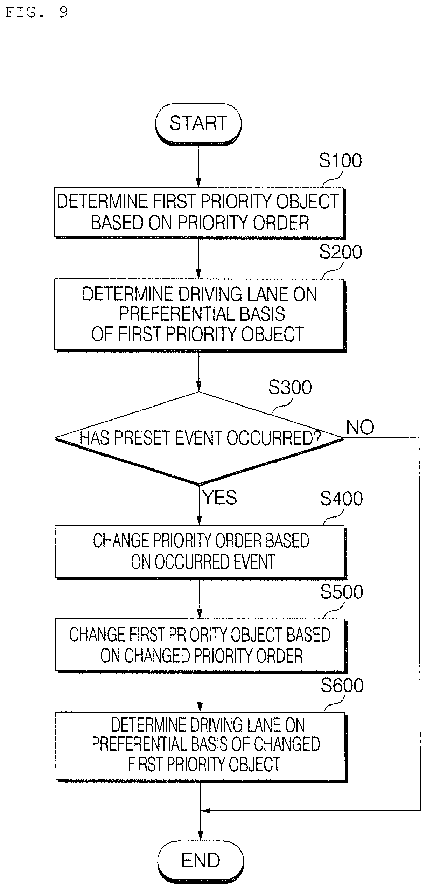

FIG. 9 is a flowchart illustrating an operation procedure of a driving system for a vehicle according to an embodiment of the present invention.

The processor 717 may determine a first priority object based on a preset priority order in S100.

For example, the priority order may be set such that a lane is a first priority object, a road facility is a second priority object, and a lane guidance structure is a third priority object. The priority order may be preset information. Information about the priority order may be stored in the memory 714.

The processor 717 may determine a driving lane for the vehicle 100 preferentially based on the first priority object in S200.

For example, when it is determined, based on object information, a first priority object and a second priority object exit, the processor 717 may determine a driving lane preferentially based on the first priority object.

For example, when it is determined, based on object information, that only a second priority object exists except for a first priority object, the processor 717 may determine a driving lane based on the second priority object.

For example, when a lane is a first priority object, the processor 717 may determine a driving lane preferentially based on a line painted on a road surface.

Based on object information or communication information, the processor 717 may determine whether a preset event has occurred in S300.

For example, the preset event may be any one of situations where a preset path guidance object is detected in front of the vehicle 100, where the vehicle 100 is entering a construction area or an unpaved area, where an accident has occurred ahead of the vehicle 100, and where there is no object indicative of a lane.

The processor 717 may change a preset priority order based on an event which has occurred in S400.

For example, when a preset path guidance object has been detected, the processor 717 may change the priority order so that the detected path guidance object becomes a first priority object.

For example, when it is determined that the vehicle 100 is entering a construction area or an accident has occurred ahead of the vehicle 100, the processor 717 may change the priority order so that a temporary guidance structure installed on the road or a person giving a hand signal becomes a first priority object.

The processor 717 may change the first priority object based on the changed priority order in S500.

For example, when it is determined that an event has occurred while a lane is a first priority object, the processor 717 may change a priority order so that an object other than the lane becomes the first priority object.

For example, when it is determined, based on object information, that a preset path guidance object is located in front of the vehicle 100, the processor 717 may determine that the path guidance object is the first priority object.

The processor 717 may determine a driving lane preferentially based on the changed first priority object in S600.

When the vehicle 100 is in the autonomous mode, the processor 717 may provide a control signal based on a determined driving lane so that the vehicle 100 autonomously travels within the driving lane. Accordingly, the vehicle 100 may autonomously travel along the determined driving lane.

When the vehicle 100 is in the manual mode, the processor 717 may provide a control signal based on a determined driving lane so that the vehicle 100 is prevented from moving out of the driving lane. Accordingly, the vehicle may not move out of the driving lane.

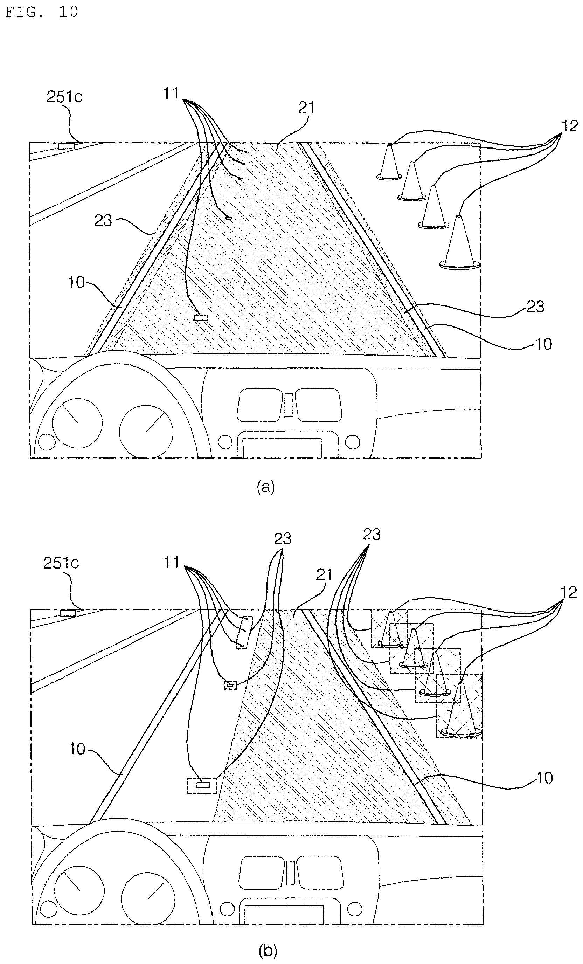

FIG. 10 is a diagram illustrating how a driving system for a vehicle according to an embodiment of the present invention determines a driving lane suitable for a driving situation by changing a priority order.

When an object is detected based on object information, the processor 717 may display, on the display unit 251, an image 23 (which is hereinafter referred to as a "detection check message") which indicates the detected object.

For example, the processor 717 may output the detection check image 23 with augmented reality on a transparent display 251c provided in the windshield (which is referred to as a "windshield display"). The processor 717 may determine a gaze direction of a driver based on an image of the driver's face acquired by the internal camera 220. Based on the gaze direction of the driver and a location and a shape of a detected object, the processor 717 may determine a shape and a location of the detection check image 23 so the detection check image overlaps with actual objects 10, 11, and 12 within a field of view of the driver.

Unlike the example shown in the drawing, the processor 717 may display the detection check image 23 over a top view image which is displayed on the display unit 251. In addition, the processor 717 may display, on the display unit 251, a front image which shows an area forward of the vehicle 100, and may display the detection check image 23 over the front image.

Referring to (a) in FIG. 10, the processor 717 may determine a driving lane for the vehicle 100 on the preferential basis of a line 10 painted on a road surface.

Based on an initial priority order, the processor 717 may determine that the line 10 is a first priority object.

The processor 717 may display, on the wind shield display 251c, a detection check image 23 which corresponds to the detected line 10.

The processor 717 may determine that a region between two side-by-side arranged lines 10 is a driving lane for the vehicle 100.

The processor 717 may display, on the wind shield display 251c, a driving lane image 21 which indicates a driving lane.

The processor 717 may determine a shape and a location of the driving lane image so that a region determined to be a driving lane and the driving lane image 21 overlap within a field of view of the driver.

When the vehicle 100 is in the autonomous mode, the processor 717 may provide a control signal so that the vehicle 100 autonomously travels along the driving lane. Accordingly, the vehicle 100 may autonomously travels within a driving lane determined by the driving system 710.

When the vehicle 100 is in the manual mode and a lane departure prevention function is activated, the processor 717 may provide a control signal so that the vehicle 100 is prevented from moving out of a determined driving lane. Accordingly, the vehicle 100 may be prevented from moving out of the driving lane.

Referring to (b) of FIG. 10, when it is determined that a present event has occurred, the processor 717 may determine a driving lane by determining an object other than the line 10 to be a first priority object.

For example, the preset event may be any of situations where a preset path guidance object (for example, a traffic cone 12, and a temporary line reflector) is detected by the object detection apparatus 300, and where the vehicle 100 is entering a construction area.

Based on object information acquired by the object detection apparatus 300 or communication information acquired by the communication apparatus 400, the processor 717 may determine whether the preset event has occurred.

For example, when it is determined, based on object information, that a temporary line reflector 11 attached onto a road surface or a traffic cone 12 is detected in the vicinity of a region determined to be a driving lane, the processor 717 may determine that a present event has occurred, and determine that the temporary line reflector 11 or the traffic cone 12 is a first priority object.

For example, when it is determined that the vehicle 100 is entering a construction area, the processor 717 may determine that a preset event has occurred, and determine that the temporary line reflector 11 or the traffic cone 12 is a first priority object.

The processor 717 may change a priority order so that the temporary line reflector 11 or the traffic cone 12 becomes a first priority object. The processor 717 may store information about the changed priority order in the memory 714.

When the temporary line reflector 11 or the traffic cone 12 is determined to be a first priority object, the processor 717 may determine a driving lane preferentially based on the temporary line reflector 11 or the traffic cone 12.

When the temporary line reflector 11 or the traffic cone 12 is detected based on object information, the processor 717 may display, on the display unit 251, a detection check image 23 which corresponds to the detected object. For example, the processor 717 may display a detection check image 23 with augmented reality on the windshield display 251c.

The processor 717 may determine a driving lane based on arrangement of the temporary line reflector 11 and arrangement of the traffic cone 12.

In this case, the determined driving lane may be a region existing between a plurality of temporary line reflectors 11 and a plurality of traffic cones 12.

The processor 717 may display, on the windshield display 251c, a driving lane image 21 which indicates a driving lane.

The processor 717 may determine a shape and a location of the driving lane image 21 so that a region determined to be a driving lane and the driving lane image 21 overlap within a field of view of a driver.

When the vehicle 100 is in the autonomous mode, the processor 717 may provide a control signal so that the vehicle 100 autonomously travels between the plurality of temporary line reflectors 11 and the plurality of traffic cones 12.

When the vehicle3 100 is in the manual mode, the processor 717 may provide a control signal so that the vehicle 100 is prevented from moving out of the region between the plurality of temporary line reflectors 11 and the plurality of traffic cones 12.

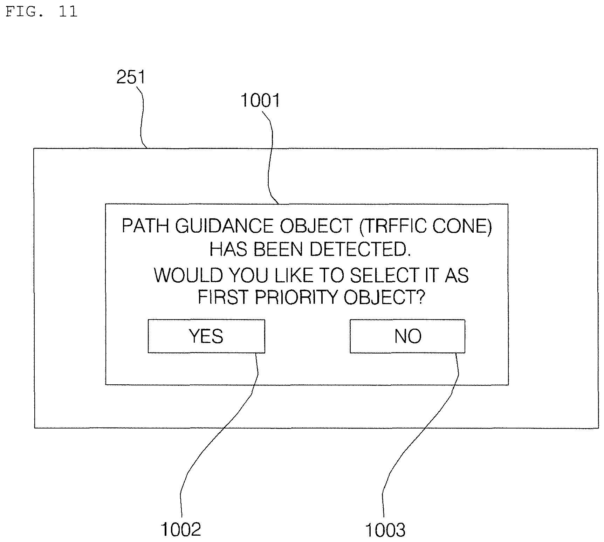

FIG. 11 is a diagram illustrating how to a driving system for a vehicle according to an embodiment of the present invention outputs an alarming menu to a user in response to detection of a path guidance object.

When it is determined that a preset event has occurred, the processor 717 may output, to the display unit 251, a menu 1001 (hereinafter, referred to as a "priority change menu") for changing a priority order.

In the priority change menu 1001, the processor 717 may display a text for confirming the intention to change a priority order, a Yes button 1002 for changing a priority order, and a No button 1003 for not changing a priority order.

For example, when the preset event is detection of the traffic cone 12, the processor 717 may determine that a preset event has occurred and may output the priority change menu 1001 to the display unit 251.

When a user input corresponding to the Yes button 1002 is received, the processor 717 may change the priority order so that the traffic cone 12 is determined to be a first priority object.

When a user input corresponding to the No button 1003 is received, the processor 717 may keep the existing priority order intact.

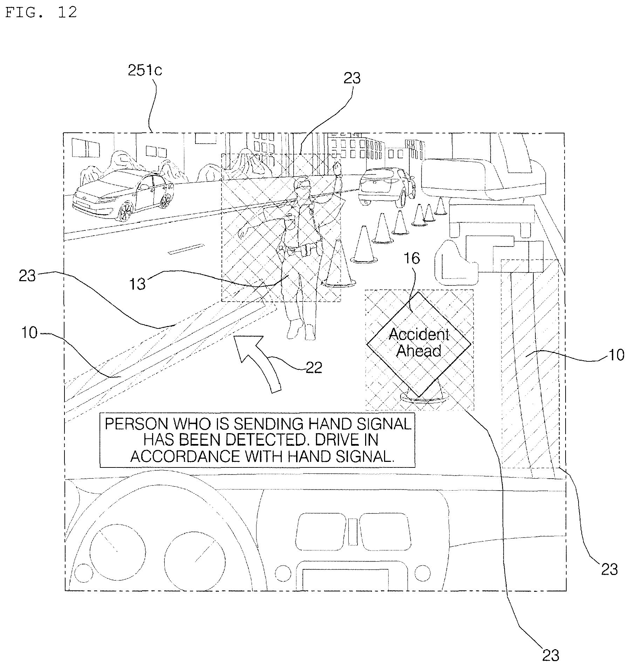

FIG. 12 is a diagram illustrating how a driving system for a vehicle according to an embodiment of the present invention determines a driving lane based on a person who is giving a hand signal.

When a line 10 is detected from the road surface based on object information, the processor 717 may output, to the windshield display 251c, a detection check image 23 corresponding to a line 10.

Based on an actual location of the line 10 and a gaze direction of a user, the processor 717 may determine a shape and a location of the detection check image 23 so that the line 10 and the detection check image 23 overlap within a field of view of the user.

When a preset path guidance object is detected based on object information, the processor 717 may determine that an event has occurred.

For example, the preset path guidance object may be a person 13 who is giving a hand signal or may be an accident notification sign 16 which notifies a traffic accident. When it is determined, based on object information, that the person 13 or the accident notification sign 16 is located in front of the vehicle 100, the processor 717 may determine that the person 13 or the accident notification sign 16 is a first priority object, by changing a preset priority order.

The processor 717 may display the detection check image 23 with augmented reality on the windshield display 251c so that the detection check image 23 overlap with the person 13 and the accident notification sign 16.

When the person 13 and the accident notification sign 16 is detected, the processor 171 may determine that the person 13 is a first priority object and the accident notification sign 16 is a second priority object.

The processor 717 may display, on the windshield display 251c, a message for notifying that the person 13 is detected.

The processor 717 may determine a driving lane preferentially based on the person 13.

The processor 717 may determine a driving lane preferentially based on a hand signal given by the person 13. Based on object information, the processor 717 may determine a hand signal given by the person 13.

For example, when it is determined that a hand signal given by the person 13, who is determined to be a first object, guides the vehicle 100 to the right, the processor 717 may determine that a path detouring to the right side of the person 13 is a driving lane.

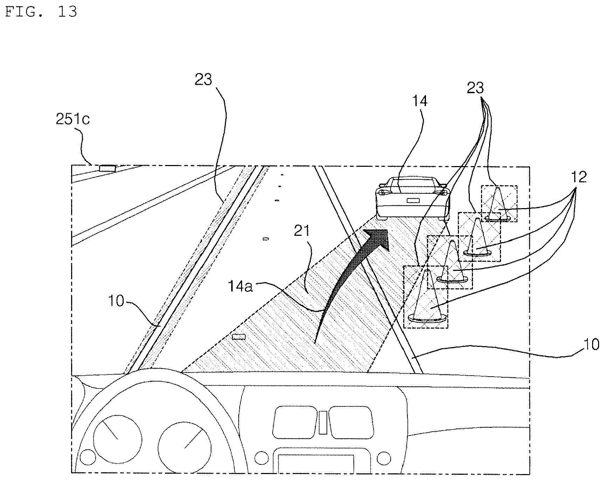

FIG. 13 is a diagram illustrating how a driving system for a vehicle according to an embodiment of the present invention determines a driving lane based on a path of travel of a preceding vehicle.

When it is determined, based on object information, that a path guidance object exists in front of the vehicle 100 and that there is a preceding vehicle 14 travelling ahead of the vehicle 100, the processor 717 may determine a first priority object based on a path 14a of travel of the preceding vehicle 14.

For example, based on object information, the processor 717 may determine that a plurality of traffic cones 12 exists in front of the vehicle 100. A traffic cone 12 is one of path guidance objects.

When it is determined that a path guidance object exists in front of the vehicle 100, the processor 717 may determine, based on object information or communication information, whether there is the preceding vehicle 14 travelling ahead of the vehicle 100.

For example, based on object information, the processor 717 may detect the preceding vehicle 14 travelling ahead of the vehicle 100.

For example, the processor 717 may receive, from the communication apparatus 400, information about the preceding vehicle 14 travelling ahead of the vehicle 100, and may determine, based on the received information, that there is the preceding vehicle 14 travelling ahead of the vehicle 100. The information about the preceding vehicle 14 may be transmitted by at least one of the following: a server 15 for providing traffic information, a traffic infrastructure installed on the road, and the preceding vehicle 14.

When it is determined that a path guidance object exists in front of the vehicle 100 and that the preceding vehicle 14 exists in front of the vehicle 100, the processor 717 may determine a first priority object based on the path 14a of travel of the preceding vehicle 14.

Based on the path 14a of travel of the preceding vehicle 14 and a shape and a location of a detected object, the processor 717 may determine that an object which was used as the basis of determining a path during travelling of the preceding vehicle 14 is a first priority object.

For example, when it is determined, based on the path 14a of travel of the preceding vehicle 14 and a shape and a location of the line 10, that the preceding vehicle 14 is travelling along the line 10 painted on a road surface, the processor 717 may determine that the line 10 is a first priority object.

For example, when it is determined, based on the path 14a of travel of the preceding vehicle 14 and positions of a plurality of traffic cones 12, that the preceding vehicle 14 is travelling along the plurality of traffic cones, the processor 717 may determine that each of the traffic cones 12 is the first priority object.

In the example of FIG. 13, the processor 717 may determine that the preceding vehicle 14 is travelling along the plurality of traffic cones 12. The processor 717 may determine each of the plurality of traffic cones 12 to be the first priority object.

The processor 717 may determine a driving lane preferentially based on the plurality of traffic cones 12.

The processor 717 may determine that a region formed in a direction of arrangement of the plurality of traffic cones 12 is a driving lane for the vehicle 100.

The processor 717 may display, on the windshield display 251c, a driving lane image 21 which indicates a driving lane.

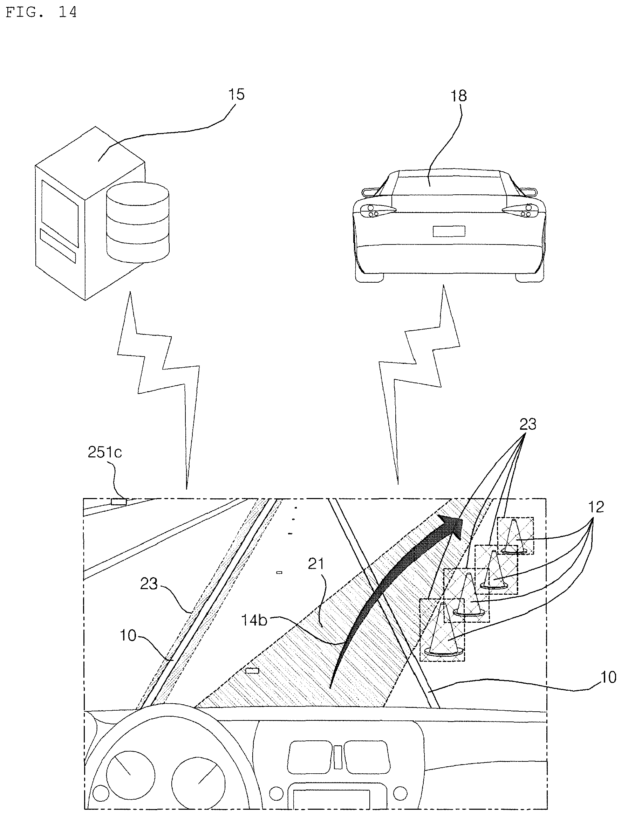

FIG. 14 is a diagram illustrating how a driving system for a vehicle according to an embodiment of the present invention determines a driving lane based on a previous path of travel of a different vehicle.

When it is determined that a path guidance object exists in front of the vehicle 100 and that there is no preceding vehicle 14 travelling ahead of the vehicle 100, the processor 717 may determine, based on communication information, whether a path previously travelled by a different vehicle 18 (hereinafter referred to as a "previous path of travel of a different vehicle") exists in one region in front of the vehicle 100.

The communication information includes traffic information. The traffic information may include information about a traffic condition, occurrence of an accident, a degree of traffic congestion, and previous paths of travel of vehicles in a specific area.

A traffic infrastructure or a server 15 for providing traffic information may collect paths of travel of vehicles travelling in the specific area. Information about the paths of travel of the vehicles travelling in the specific area includes traffic information. The traffic infrastructure or the server 15 may provide traffic information about the specific area to a vehicle travelling in the specific area.

Based on traffic information provided by the traffic infrastructure or the server 15, the processor 717 may determine a previous driving path of the different vehicle 18 in an area in which the vehicle 100 is travelling.

In addition, through the communication apparatus 400, the processor 717 may request the different vehicle 18, which is located within a preset distance from the vehicle 100, to transmit information about a previous path of travel of the different vehicle 18. Accordingly, the different vehicle 18 which previously travelled the area in which the vehicle 100 is now travelling may provide information about its previous driving path to the vehicle 100. Based on the information provided by the different vehicle 18, the processor 717 may determine the previous path of travel of the different vehicle 18.

When it is determined that a path guidance object exists in front of the vehicle 100 and that a previous path of travel of the different vehicle 18 exists, the processor 717 may determine a first priority object based on the previous path of travel of the different vehicle 18.

The processor 717 may determine that an object corresponding to the previous path of travel of the different vehicle 18 is a first priority object.

The object corresponding to the previous path of travel of the different vehicle 18 is an object which was used as the basis of determining a path during travelling of the different vehicle 18.

For example, when it is determined, based on the previous path of travel of the different vehicle 18, that the different vehicle 18 travelled along a plurality of traffic cones 12, the processor 717 may determine that each of the traffic cones 12 to be an object corresponding to the previous path of travel of the different vehicle 18. The processor 717 may determine that each of the traffic cones 12 is a first priority object, by changing a priority order.

The processor 717 may determine a driving lane preferentially based on the traffic cones 12.

The processor 717 may display, on the windshield display 251c, a driving lane image 21 which indicates a driving lane.

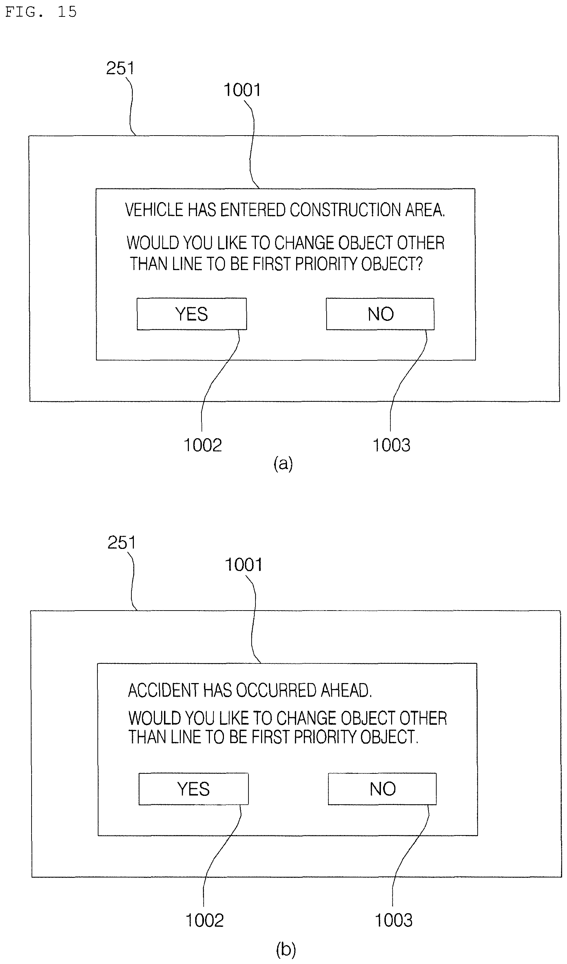

FIG. 15 is a diagram illustrating how a driving system for a vehicle according to an embodiment of the present invention outputs an image which notifies occurrence of a preset event.

Referring to (a) of FIG. 15, the processor 717 may determine, based on object information or communication information, whether the vehicle 100 is entering a construction area.

When it is determined that the vehicle 100 is entering a construction area, the processor 717 may output a priority change menu 1001 to select whether to determine that an object preset to correspond to the construction area is a first priority object.

For example, the object preset to correspond to the construction area may be the traffic cone 12, a temporary barrier facility installed on the road, a temporary line reflector 11 attached onto a road surface, a person 13 who is giving a hand signal, etc.

The processor 717 may display, on the priority change menu 1001, a text notifying that the vehicle 100 is entering the construction area, a Yes button 1002 for changing the priority order, and a No button 1003 for keeping the priority or

When a user input on the Yes button 1002 is received, the processor 717 may change a priority order so that the object preset to correspond to the construction area becomes a first priority object.

When a user input on the No button 1003 is received, the processor 717 does not change the priority order.

Referring to (b) of FIG. 15, the processor 717 may determine, based on object information or communication information, whether an accident has occurred ahead of the vehicle 100.

When it is determined that an accident has occurred ahead of the vehicle 100, the processor 717 may output the priority change menu 1001 to select whether to determine that an object preset to correspond to a traffic accident is a first priority object.

For example, the object preset to correspond to a traffic accident may be a traffic cone 12, an accident notification sign 16 notifying occurrence of a traffic accident, a person 13 who is giving a hand signal, etc.

In the priority change menu 1001, the processor 717 may display a text notifying that an accident has occurred ahead of the vehicle 100, a Yes button 1002 for changing the priority order, and a No button 1003 for keeping the priority order intact.

When a user input on the Yes button 1002 is received, the processor 717 may change the priority order so that the object preset to correspond to the traffic accident is determined to be a first priority object.

When a user input on the No button 1003 is received, the processor 717 does not change the priority order.

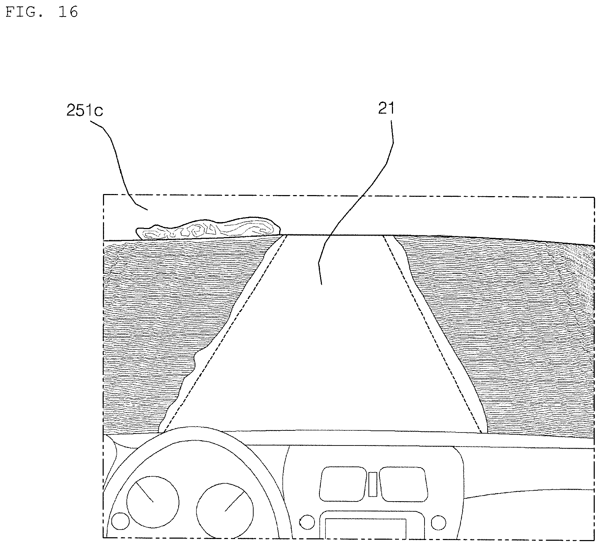

FIG. 16 is a diagram illustrating how a driving system for a vehicle according to an embodiment of the present invention determines a driving lane in an unpaved area.

Based on object information or communication information, the processor 717 may determine whether the vehicle 100 is entering an unpaved area.

For example, based on map information included in communication information and location information of the vehicle 100, the processor 717 may determine whether the vehicle 100 is now located within an unpaved area.

For example, when it is determined, based on object information, that there is no object indicative of a line 10, the processor 717 may determine that the vehicle 100 is entering an unpaved area.

When it is determined that the vehicle 100 is entering an unpaved area, the processor 717 may determine a driving lane based on color distribution of the ground which is determined based on object information.

Based on the object information, the processor 717 may determine the color distribution of the ground in the surroundings of the vehicle 100.

A region in which vehicles are allowed to travel in the unpaved area may have a color distinguishable from other regions. For example, the region able to be travelled by vehicles may have a soil color whereas other regions may have a green color.

In addition, a tire's trajectory may be left on the ground in the unpaved area.

Based on color distribution of the ground, the processor 717 may determine a region which is formed long with a color distinguishable from other regions in the unpaved area. In the example of FIG. 16, because a region able to be travelled by vehicles have a color distinguishable from other regions, the processor 717 may determine, based on color distribution of the ground, the region able to be travelled by vehicles.

Unlike the example of FIG. 16, the processor 717 may determine, based on color distribution of the ground, a tire's trajectory which isleft on the unpaved area. The ground surface having a tire's trajectory may be determined to be a region in which the vehicle 100 is able to travel.

The processor 717 may determine that a region, which is formed long with a color distinguishable from other regions in an unpaved area, or a tire's trajectory, which is left on the ground, is a driving lane.

The processor 717 may display, on the windshield display 251c, a driving lane image 21 which indicates a driving lane.

Accordingly, the driving lane image 21 may overlap with one region of the ground, the region which is formed long with a color distinguishable from other regions.

The vehicle 100 may autonomously travel along one region which is formed long with a color distinguishable from other regions.

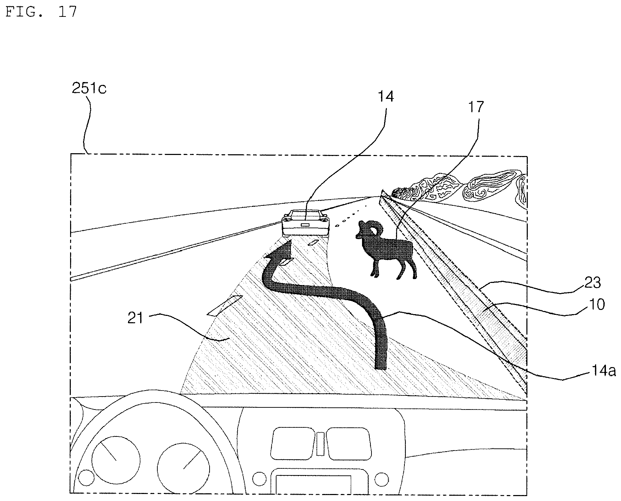

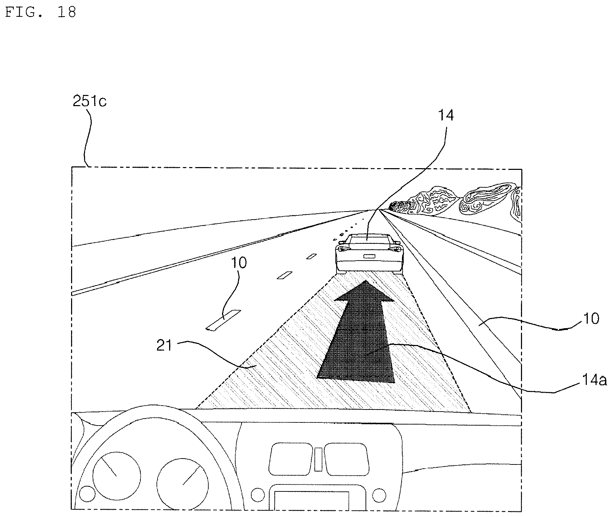

FIGS. 17 and 18 are diagram illustrating how a driving system for a vehicle according to an embodiment of the present invention determines a driving lane based on a path of travel of a preceding vehicle.

Referring to FIG. 17, when it is determined, based on object information, that a speed at which a preceding vehicle 14 travelling ahead of the vehicle 100 is steered is equal to or greater than a first reference value, the processor 717 may determine a driving lane preferentially based on a path 14a of travel of the preceding vehicle 14.

The first reference value is a reference value used to determine as to whether the preceding vehicle 14 is steered drastically.

When the speed at which the preceding vehicle 14 is steered is equal to or greater than the first reference value, the preceding vehicle 14 may be regarded as being steered drastically.

When the preceding vehicle 14 is steered drastically, the preceding vehicle 14 may be regarded as attempting to avoid a specific object 17. Thus, the driving system 710 according to the present invention predicts such a case and determines a driving lane in which the vehicle 100 is able to avoid the specific object.

When the speed at which the preceding vehicle 14 is steered is equal to or greater than the first reference value, the processor 717 may determine that the object 17 needed to be avoided exists in front of the preceding vehicle 14.

The processor 717 may determine a driving lane for the vehicle 100 preferentially based on the path 14a of travel of the preceding vehicle 14, rather than a line 10 painted on the road surface.

Preferentially based on the path 14a of travel of the preceding vehicle 14, the processor 717 may determine that a path detouring along a direction of travel of the preceding vehicle 14 is a driving lane.

The processor 717 may display, on the windshield display 251c, an image 21 indicating a driving lane.

Referring to FIG. 18, when a preceding vehicle 14 is travelling ahead of the vehicle 100, the processor 717 may determine a driving lane preferentially based on a path 14a of travel of the preceding vehicle 14.

When it is determined, based on object information, that a visibility of a line 10 indicating a driving lane is equal to or smaller than a second reference value, the processor 717 may determine the driving lane preferentially based on the path 14a of travel of the preceding vehicle 14 which is travelling ahead of the vehicle 100.

The second reference value is a reference value used to determine as to whether the line 10 is possibly not detected due to its low visibility.

Based on object information, the processor 717 may determine a visibility of the line 10 indicating a driving lane.

When the visibility of the line 10 is equal to or smaller than the second reference value, the driving system 710 may not be able to detect the line 10 due to a low visibility of the line 10.

When the visibility of the line 10 indicating a driving lane is equal to or smaller than the second reference value, the lane 10 may not be detected. Thus, in this case, it is safe to determine a driving lane preferentially based on the path 14a of travel of the preceding vehicle 14.

When the visibility of the line 10 indicating a driving lane is equal to or smaller than the second reference value, the processor 717 may determine that the path 14a of travel of the preceding vehicle 14 is a driving lane for the vehicle 100.

The processor 717 may display, on the windshield display 251c, a driving lane image 21 indicating a driving lane. In this case, the driving lane image 21 may be an image indicating the path 14a of travel of the preceding vehicle 14.

When the vehicle 100 is in the autonomous mode, the processor 717 may provide a control signal to the vehicle drive apparatus 600 so that the vehicle 100 travels following the preceding vehicle 14. Accordingly, the vehicle 100 may autonomously travel along the path 14a of travel of the preceding vehicle 14.

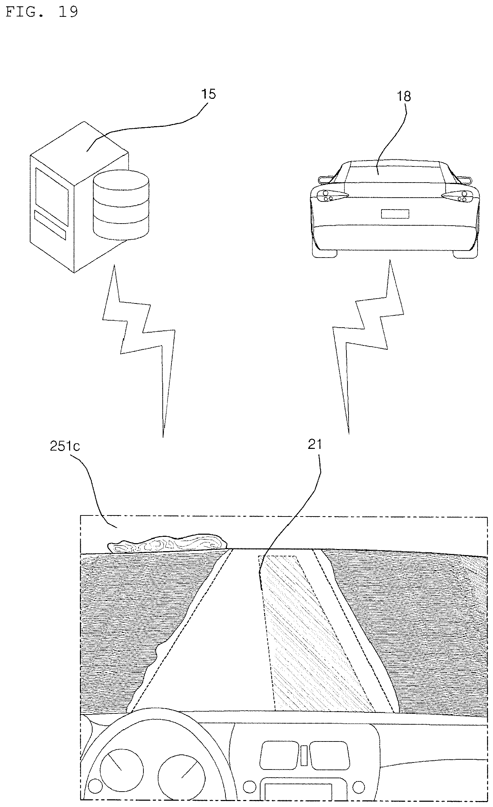

FIG. 19 is a diagram illustrating how a driving system for a vehicle according to an embodiment of the present invention determines a driving lane based on information about a temporary line which is transmitted by a different device.

Referring to FIG. 19, when information about a temporary line is received through the communication apparatus 400, the processor 717 may determine a driving lane preferentially based on the information about the temporary line.

A temporary line is a virtual line determined by a different vehicle 18 or a traffic infrastructure.

The different vehicle 18 may determine a temporary line based on a sensed surrounding situation.

A traffic infrastructure or a server 15 for providing traffic information may determine a temporary line depending on a road condition.

Alternatively, the traffic infrastructure of the server 15 may randomly determine a temporary line. For example, the traffic infrastructure or the server 15 may provide information about the determined temporary line to a vehicle which is now travelling in an unpaved area. Accordingly, a vehicle travelling in the unpaved area may travel along the temporary line determined by the traffic infrastructure or the server 15.

A temporary line is not an actual line painted on a road surface, and thus, information about the temporary line may include information about a location of the temporary line determined by the different vehicle 18 or the infrastructure.

Based on the information about the temporary line, the processor 717 may determine a location of the temporary line over the ground surface on which the vehicle 100 is travelling.

The processor 717 may determine that a temporary line determined based on information about the temporary line is a driving lane for the vehicle 100.

The processor 717 may display, on the windshield display 251c, a driving lane image 21 indicating a driving lane.

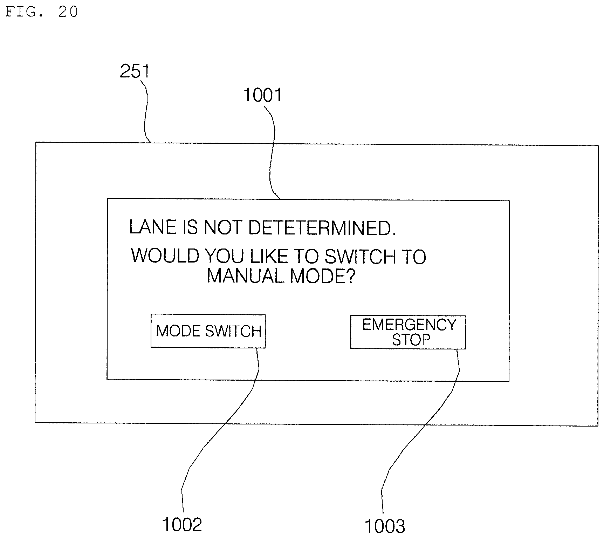

FIG. 20 is a diagram how a driving system for a vehicle according to an embodiment of the present invention outputs a menu for notifying that a driving lane is not determined.

When a driving lane is not determined based on object information or communication information while the vehicle 100 is autonomously travelling, the processor 717 may output, through the output unit 250, an alarm to notify that a driving lane is not determined.

For example, the processor 717 may display, on the display unit 251, a menu 1001 (hereinafter, referred to as a "detection failure menu") for coping with the situation in which a driving lane is not determined.

In the detection failure menu 1001, the processor 717 may display a text notifying that a driving lane is not determined, a mode switch button 1002 for switching to the manual mode, and an emergency stop button 1003 for performing an emergency stop.

When a user input on the mode switch button 1002 is received, the processor 717 may switch the control mode of the vehicle 100 to the manual mode.

When a user input on the emergency stop button 1003 is received, the processor 717 may provide a control signal so that the vehicle 100 performs an emergency stop.

The emergency stop is a maneuver of stopping the vehicle 100 at a location closest to the current location of the vehicle 100 within a parking available space in the vicinity of the vehicle 100. Based on object information, the processor 717 may determine a location closest to the current location of the vehicle 100 within the parking available space in the vicinity of the vehicle 100.

The processor 717 may provide a control signal based on the object information so that the vehicle 100 performs an emergency stop. Accordingly, the vehicle 100 may move and be then parked at the location closest to the current location of the vehicle 100 within the parking available space in the vicinity of the vehicle 100.

When it is determined that a preset period of time elapses after the detection failure menu 1001 is displayed, the processor 717 may provide a control signal so that the vehicle 100 performs an emergency stop.

The present invention as described above may be implemented as code that can be written on a computer-readable medium in which a program is recorded and thus read by a computer. The computer-readable medium includes all kinds of recording devices in which data is stored in a computer-readable manner. Examples of the computer-readable recording medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). In addition, the computer may include a processor or a controller. Thus, the above detailed description should not be construed as being limited to the embodiments set forth herein in all terms, but should be considered by way of example. The scope of the present invention should be determined by the reasonable interpretation of the accompanying claims and all changes in the equivalent range of the present invention are intended to be included in the scope of the present invention.

## Claims

1. A driving system for a vehicle (100), comprising:
an object detection apparatus (300) configured to generate object information which is information about an object located outside the vehicle (100); and
a processor (717) configured to:
determine a driving lane for the vehicle (100) based on a preset priority order and the object information, wherein a priority order is an order for determining a driving lane based on one or more objects, and
when it is determined based on the object information that a preset event has occurred, change the priority order based on the object information.

2. The driving system according to claim 1, wherein the processor (717) is further configured to determine the driving lane based on a first priority object which is determined based on the priority order.

3. The driving system according to claim 2, wherein the processor (717) is further configured to:
determine the driving lane based on a line which is detected based on the object information; and
when it is determined that the preset event has occurred, determine, based on the preset event, that an object other than the line is the first priority object.

4. The driving system according to claim 2, or 3, wherein the processor (717) is further configured to:
when it is determined, based on the object information, that a preset path guidance object is located in front of the vehicle (100), determine that the path guidance object is the first priority object, and
wherein the processor (717) is preferably further configured to:
when it is determined, based on the object information, that a lane guidance structure is located in front of the vehicle (100), determine that the lane guidance structure is the first priority object.

5. The driving system according to claim 4, wherein the processor (717) is further configured to:
when it is determined, based on the object information, that the path guidance object exists in front of the vehicle (100) and that there is a preceding vehicle travelling ahead of the vehicle (100), determine the first priority object based on a path of travel of the preceding vehicle.

6. The driving system according to claim 5, further comprising a communication apparatus (400) configured to receive communication information transmitted by a different device,
wherein the processor (717) is further configured to, when it is determined that there is no preceding vehicle, determine the first priority object based on a previous path of travel of a different vehicle, which is determined based on the communication information.

7. The driving system according to any one of claims 2 to 6, wherein the processor (717) is further configured to:
when it is determined, based on the object information, that the vehicle (100) is entering a construction area or that an accident has occurred ahead of the vehicle (100), determine that a preset path guidance object is the first priority object, and/or
wherein the processor (717) is further configured to:
when it is determined, based on the object information, that the vehicle (100) is entering an unpaved area, determine the driving lane based on color distribution of the ground, which is determined based on the object information.

8. The driving system according to any one of claims 2 to 7, wherein the processor (717) is further configured to:
when it is determined, based on the object information, that a speed at which a preceding vehicle travelling ahead of the vehicle (100) is steered is equal to or greater than a first reference value, determine the driving lane preferentially based on a path of travel of the preceding vehicle.

9. The driving system according to claim 2, further comprising a communication apparatus (400) configured to receive communication information which is information transmitted by a different device,
wherein the processor (717) is further configured to:
when it is determined, based on the object information, that a visibility of a line indicating the driving lane is equal to or smaller than a second reference value, determine the driving lane based on a path of travel of a preceding vehicle travelling ahead of the vehicle (100); and
when it is determined that there is no preceding vehicle, determine the driving path based on a previous path of travel of a different vehicle, which is determined based on the communication information.

10. The driving system according to any one of claims 2 to 8, further comprising a communication apparatus (400) configured to receive communication information which is information transmitted by a different device,
wherein the processor (717) is further configured to determine, based on the communication information, whether the preset event has occurred, and
wherein the processor (717) is preferably further configured to:
when it is determined, based on the communication information, that the vehicle (100) is entering a construction area or that an accident has occurred ahead of the vehicle (100), determine a preset path guidance object to be the first priority object.

11. The driving system according to claim 10, wherein the processor (717) is further configured to:
when information about a temporary line is received through the communication apparatus (400), determine the driving lane based on the information about the temporary line.

12. The driving system according to claim 10 or 11, wherein the processor (717) is further configured to:
when a first driving lane determined based on the communication information and a second driving lane determined based on the object information are different, display the first driving lane and the second driving lane on a display unit (251) provided in the vehicle (100).

13. The driving system according to claim 12, wherein the processor (717) is further configured to:
when the vehicle (100) is autonomously travelling, display, on the display unit (251), a menu for selecting one of the first driving lane and the second driving lane; and
control the vehicle (100) to travel autonomously in a lane which is selected by a user input from between the first driving lane and the second driving lane.

14. The driving system according to claim 1, further comprising a communication apparatus (400) configured to receive communication information which is information transmitted by a different device,
wherein the processor (717) is further configured to;
when it is determined, based on the object information, that there is no object indicative of the driving lane exists while the vehicle (100) is autonomously travelling, determine the driving lane based on a path of travel of a preceding vehicle travelling ahead of the vehicle (100); and
when it is determined that there is no preceding vehicle, determine the driving lane based on a previous path of travel of a different vehicle, wherein the previous path of travel of the different vehicle is determined based on the communication information.

15. The driving system according to claim 14, wherein the processor (717) is further configured to:
when it is determined that there is no object indicative of the driving lane, output an alarm through an output unit of the vehicle (100) to notify that a driving lane has not been detected; and
when it is determined that a preset period of time elapses after the alarm is output, control the vehicle (100) so that the vehicle (100) performs an emergency stop.
